# EUROPÄISCHE PATENTSCHRIFT

(11) **EP 3 368 245 B1**
(45) Veröffentlichungstag und Bekanntmachung des Hinweises auf die Patenterteilung: **23.02.2022**
(21) Anmeldenummer: 16809279.9
(22) Anmeldetag: 12.10.2016
(51) Int. Cl.: B23Q 3/155, B23Q 3/157, B23Q 39/00

(54) **UMLAUFENDES MEHREBENENROHRMAGAZIN MIT MINDESTENS EINER HALBAUTOMATISCHEN WERKZEUGAUFNAHME**
REVOLVING MULTILEVEL TUBE MAGAZINE COMPRISING AT LEAST ONE SEMI-AUTOMATIC TOOL HOLDER
MAGASIN TUBULAIRE MULTINIVEAU ROTATIF COMPRENANT AU MOINS UN RACCORDEMENT D'OUTIL SEMI-AUTOMATIQUE

(30) Priorität: 13.10.2015 DE 102015013134
(43) Veröffentlichungstag der Anmeldung: 05.09.2018
(73) Patentinhaber: Benz GmbH Werkzeugsysteme, 77716 Haslach (DE)
(72) Erfinder: ZELLER, Christoph, 77756 Hausach (DE); GIESSLER, Wilhelm, 77790 Steinach (DE)
(74) Vertreter: Hoffmann Eitle
(86) Internationale Anmeldenummer: PCT/DE2016/000365
(87) Internationale Veröffentlichungsnummer: WO 2017/063625

(56) Entgegenhaltungen:
- EP-A1- 2 666 586
- DE-U1-202004 015 097
- DE-U1-202014 105 912
- JP-A- H0 691 469

## Beschreibung

Die Erfindung betrifft ein umlaufendes Mehrebenenrohrmagazin mit mehreren Werkzeugaufnahmeebenen und Werkzeugaufnahmereihen, in dessen Innenraum mehrere Arbeitsspindeln, eine pro Werkzeugaufnahmeebene, in einem werkzeugmaschinenseitig ortsfest angeordneten, formsteifen Zentralblock gelagert sind.

In den meisten Bearbeitungszentren, in denen zeitgleich mehrere vergleichbare Bearbeitungen durchgeführt werden, werden Revolverköpfe eingesetzt, die mehrere Werkzeugebenen aufweisen, vgl. DE 20 2014 105 912 U1. Mit den hier gezeigten Revolverköpfen wird beispielsweise ein Vierzylindermotorengehäuse bearbeitet. Alle am Revolverkopf angeordneten Werkzeuge haben ihre eigenen Antriebe oder werden über ein im Revolverkopf angeordnetes Getriebe angesteuert. Dabei ist jede werkzeugtragende Werkzeugaufnahme im umlaufenden Grundkörper des Revolverkopfes mittels einer hochpräzisen Schnittstelle formsteif gehalten. Dadurch muss bei jedem Weitertakten von einer Werkzeuggruppe zur nächsten der massive, schwere Grundkörper weitergeschwenkt werden. In dieser Wechselphase ist keine hohe Dynamik erreichbar.

Aus der EP 1 399 293 B2 ist ebenfalls ein Revolverkopf bekannt. Bei dieser Variante wird im Zentrum eine Antriebsspindel untergebracht, die sich an der Werkzeugmaschine mittels einer Drehmomentstütze abstützt. Um die Antriebsspindel herum rotiert ein scheibenförmiger Revolverkopf. Letzterer lagert die verschiedenen Werkzeughalter. Zwischen dem Revolverkopf und der Antriebsspindel sitzt eine hydraulisch gesteuerte spielbehaftete Schiebekupplung, über die die Welle der Arbeitsspindel an der Welle der Werkzeugaufnahme angekuppelt wird. Um nun eine brauchbare Wiederholgenauigkeit zu erzielen, muss der Revolverkopf auch hier formsteif und massiv ausgeführt sein. Da bei einem Rotationskörper, wie einem Revolverkopf, das Massenträgheitsmoment vom Quadrat des Radius abhängt, ist bei dieser Lösung die Weitertaktdynamik nur unwesentlich besser als beim Gegenstand des Gebrauchsmusters DE 20 2014 105 912 U1.

Ein Werkzeugrevolver ist somit ein Träger von mehreren angetriebenen Werkzeugen. Auf seinem Basiskörper, z.B. einer Planscheibe oder einem Stern, sind Werkzeuge fest montiert und präzise ausgerichtet. Der Basiskörper, das zentrale Bauteil des Werkzeugrevolvers, leitet die am Werkzeug entstehenden Bearbeitungskräfte und -momente direkt an die Werkzeugmaschine weiter. Der Basiskörper muss folglich so formsteif sein, dass es beim Werkzeug - während des Bearbeitungsvorganges - an der Werkzeugschneide nicht zu Positionsabweichungen kommt. Der Träger bewerkstelligt somit das Halten der Werkzeugposition unter Bearbeitungsbelastung. Zudem müssen bei Revolverköpfen die Werkzeugaufnahmen bei jedem Austausch neu ausgerichtet werden.

Aus der DE 10 2012 104 490 A1 ist ein Werkzeugträgersystem für eine Werkzeugmaschine bekannt, bei der an einer Werkstückträgerbasis ein Basisteil befestigt ist, in dem eine Arbeitsspindel angeordnet ist. An der Werkstückträgerbasis ist ferner ein Flansch gelagert, der sich mittels eines Hubzylinders gegenüber dem Basisteil verschieben lässt. Am Flansch sitzt rotierbar eine Werkzeugträgereinheit. Letztere lagert als Magazin die Werkzeughalteaufnahmen. Zum Arbeiten wird die Werkzeugträgereinheit gegen die Vorderseite der im Basisteil sitzenden Arbeitsspindel verfahren, um die Arbeitsspindel an die gewählte Werkzeughalteaufnahme zu kuppeln. Nach dem Kuppeln führt die Werkzeugträgereinheit nochmals gegen die Vorderseite der Arbeitsspindel einen Hub aus, um die Werkzeugaufnahme aus ihrer Arretierung an der Werkzeugträgereinheit zu lösen.

Der vorliegenden Erfindung liegt das Problem zugrunde, ein umlaufendes Mehrebenenrohrmagazin zu entwickeln, das räumlich vor mehreren Arbeitsspindeln zeitgleich werkzeugtragende Werkzeugaufnahmen oder Werkzeuge wiederholgenau - bei kurzer Werkzeugwechselzeit - zum Einspannen und Antreiben positionieren kann. Dabei soll Werkzeugwechsel auch während des Betriebs möglich sein.

Das Problem wird mit den Merkmalen des Patentanspruchs 1 gelöst. Dazu wälz- und/oder gleitlagert der Zentralblock angetrieben verschiebbar einen ein- oder mehrteiligen Magazinrohrträger quer zur zentralblockeigenen Mittellinie. Der ein- oder mehrteilige Magazinrohrträger wälz- oder gleitlagert einen mehrere Werkzeugaufnahmeebenen und Werkzeugaufnahmereihen aufweisenden Magazinrohrkörper rotierbar um den Zentralblock. Der Magazinrohrkörper weist pro Werkzeugaufnahmereihe einen Speicherdeckel zur Aufnahme mehrerer Werkzeugaufnahmen auf, deren Anzahl maximal der Anzahl der Werkzeugaufnahmeebenen entspricht. Der Speicherdeckel ist mit den für die Werkstückbearbeitung erforderlichen Werkzeugaufnahmen vor den vorderen Stirnseiten der Arbeitsspindeln sowohl in Umlaufrichtung des Magazinrohrkörpers als auch in Verschieberichtung des Magazinrohrträgers - in einer Arbeitsposition - positionierbar. Mindestens eine dynamische Werkzeugaufnahme hat eine werkzeugaufnehmenden Schnittstelle, die sich in einer Magazinposition befindet und für das Aus- und/oder Einwechseln eines Werkzeugs durch Zuschalten oder Zuführen von Fremdenergie öffenbar ist. Die Arbeitsspindeln sind nebeneinander angeordnet und ihre Mittellinien sind parallel zur Verschieberichtung des Magazinrohrträgers orientiert.

Ein Werkzeugmagazin in Form des beschriebenen Mehrebenenrohrmagazins gilt als Peripheriegerät einer Werkzeugmaschine. Es dient der Aufbewahrung bzw. "Speicherung" der Werkzeuge, die die Werkzeugmaschine gerade nicht im Einsatz hat. Im vorliegenden Beispiel ist es kombiniert mit dem zeitgleichen Zuführen mehrerer Werkzeuge an mehrere Arbeitsspindeln. Im Werkzeugmagazin sind die Werkzeuge in einem Magazinrohrkörper nur so genau abgelegt, dass die Arbeitsspindeln sie aufnehmen können. Erst nachdem die Arbeitsspindeln die Werkzeuge mit ihren Spannmitteln übernommen haben, sind die Werkzeuge in der Werkzeugmaschine präzise und wiederholgenau positioniert. Die Arbeitsspindeln leiten über ihr Gehäuse die Bearbeitungskräfte an die Werkzeugmaschine ab. Die werkzeugspeichernden Aufbewahrungsplätze des Magazins umgeben mit großem Spiel die rotierenden Werkzeuge, ohne diese zu stützen oder in sonstiger Weise zu beeinflussen.

Da der Magazinrohrkörper während der Werkstückbearbeitung keine Funktion hat, muss er zum einen nur die Gewichtskräfte der in ihm abgelegten Werkzeugaufnahmen und Werkzeug tragen. Zum anderen muss er nur so formsteif sein, dass die Arbeitsspindeln die Werkzeugaufnahmen mit ihren Spannmitteln ergreifen können. Dadurch kann der Magazinrohrkörper einerseits im Vergleich zum werkzeugtragenden Kopf eines Revolvers sehr dünnwandig ausgeführt sein. Andererseits können für den Magazinrohrkörper Werkstoffe eingesetzt werden, deren E-Modul unterhalb von 80000 N/mm² liegt. Dadurch sind als Werkstoffe Aluminiumlegierungen oder auch Verbundwerkstoffe auf Glasfaser- oder Kohlefaserbasis denkbar. In der Folge lässt sich das polare Massenträgheitsmoment des Magazinrohrkörpers - gegenüber eines in den Außenabmessungen vergleichbaren Revolverkopfes - aufgrund der geringeren Wandstärken und der geringeren Werkstoffdichte um mehr als den Faktor 15 absenken. Das wirkt sich direkt auf die Dynamik des Magazins aus. Eine 360-Winkelgraddrehung erlaubt gegenüber einem konventionellen Revolver eine Drehzahlerhöhung um das Mehrfache.

Im Magazinrohrkörper werden die Werkzeugaufnahmen in Speicherdeckeln abgelegt. Ein Speicherdeckel kann so viele Werkzeugaufnahmen übernehmen, wie der Magazinrohrkörper Werkzeugaufnahmeebenen hat. Bei einem Um- oder Neumagazinieren können dadurch mehrere Werkzeugaufnahmen zeitgleich ausgetauscht werden.

Das Mehrebenenrohrmagazin ist geeignet, dynamische Werkzeugaufnahmen zu speichern, an denen Werkzeuge in der Zeit, in der die Arbeitsspindeln mit anderen Werkzeugen das oder die Werkstücke bearbeiten, manuell oder robotergestützt ein- und/oder ausgewechselt werden können. Dazu ist die entsprechende dynamische Werkzeugaufnahme als Halbautomat aufgebaut. Die Werkzeugaufnahme besitzt eine eigene Schnittstelle mit Spannmitteln, die z.B. von außen durch einen Maschinenbediener geöffnet werden kann. Das auszutauschende Werkzeug wird, sofern sich die Werkzeugaufnahme in ihrer Magazinposition befindet, mittels einer Federkraft in der Schnittstelle vorgespannt gehalten. Zum Öffnen des jeweiligen Spannmittels wird gegen die Wirkung der Federkraft, mit Hilfe eines pneumatischen oder hydraulischen Druckmittels, kurzzeitig gearbeitet. Während der Offenstellung des Spannmittels kann das Werkzeug gewechselt werden. Bei der Benutzung von Druckluft als Druckmittel kann diese der Werkzeugaufnahme mittels einer handgeführten Druckluftblaspistole zugeführt werden.

Das Ein- und/oder Auswechseln erfolgt speziell an den Werkzeugaufnahmen, die sich in ihrer Magazinposition befinden und von der momentanen Bearbeitungsstelle weit genug entfernt sind. Anstelle des manuell unterstützten Werkzeugwechsels mittels Druckluftblaspistole kann das Druckmittel auch über die Werkzeugmaschine der halbautomatischen Werkzeugaufnahme zugeführt werden. In diesem Fall ist in der Werkzeugaufnahme oder in deren näheren Umgebung ein Wegeventil untergebracht. Das Wegeventil kann dann manuell betätigt werden. Soll das Werkzeug mit einem Handhabungsgerät ausgetaucht werden, kann dieses auch den Taster des Wegeventils drücken. In einer weiteren Variante des Einsatzes eines Handhabungsgerätes kann das Wegeventil von der Steuerung des Handhabungsgerätes und/oder der Werkzeugmaschine elektrisch gesteuert betätigt werden. Weitere Einzelheiten der Erfindung ergeben sich aus den Unteransprüchen und den nachfolgenden Beschreibungen von schematisch dargestellten Ausführungsformen.
- Figur 1:: Perspektivische Ansicht einer mit einem Mehrebenenrohrmagazin ausgestatteten Werkzeugmaschine;
- Figur 2:: Perspektivische Ansicht des Mehrebenenrohrmagazins;
- Figur 3:: Perspektivische Ansicht des Mehrebenenrohrmagazins ohne Speicherdeckel und Werkzeughalter, verkleinert;
- Figur 4:: Vergrößerung zu Figur 3, jedoch ohne Magazinrohrkörper und Magazinstützdeckel;
- Figur 5:: Längsschnitt des Mehrebenenrohrmagazins;
- Figur 6:: Querschnitt des Mehrebenenrohrmagazins;
- Figur 7:: Längsschnitt einer Arbeitsspindel;
- Figur 8:: Längsschnittausschnitt des vorderen Bereichs der Arbeitsspindel nach Figur 7, vergrößert;
- Figur 9:: Längsschnittausschnitt des hinteren Bereichs der Arbeitsspindel nach Figur 7, vergrößert;
- Figur 10:: Teilschnitt durch das Mehrebenenrohrmagazin bei nicht adaptierter Werkzeugaufnahme;
- Figur 11:: vergrößertes Detail zu Figur 10;
- Figur 12:: Teilschnitt durch das Mehrebenenrohrmagazin bei herangeführter, aber noch nicht adaptierter Werkzeugaufnahme;
- Figur 13:: vergrößertes Detail zu Figur 12;
- Figur 14:: Teilschnitt durch das Mehrebenenrohrmagazin mit adaptierter Werkzeugaufnahme;
- Figur 15:: vergrößertes Detail zu Figur 14;
- Figur 16:: Schnitt durch ein Werkzeugaggregat;
- Figur 17:: Schnitt durch eine erste dynamische Werkzeugaufnahme für einen halbautomatischen Werkzeugwechsel;
- Figur 18:: Teilschnitt zu Figur 17 mit gespannter Schnittstelle ohne eingewechseltes Werkzeug;
- Figur 19:: Schnitt durch eine statische Werkzeugaufnahme mit einer Capto-Schnittstelle;
- Figur 20:: Schnitt durch eine statische Werkzeugaufnahme in Form eines Parallelgreifers;
- Figur 21:: Schnitt durch einen Speicherdeckel und einen Haltering.
- Figur 22:: Halbschnitt durch die dynamische Werkzeugaufnahme nach Figur 17 für einen halbautomatischen Werkzeugwechsel, vergrößert;
- Figur 23:: Schnitt durch eine zweite dynamische Werkzeugaufnahme für einen halbautomatischen Werkzeugwechsel während der Werkzeugaufnahme;
- Figur 24:: wie Figur 23, jedoch nach der Werkzeugaufnahme;
- Figur 25:: Perspektivische Ansicht von Zugdorn, Kolben und Vorspannring.

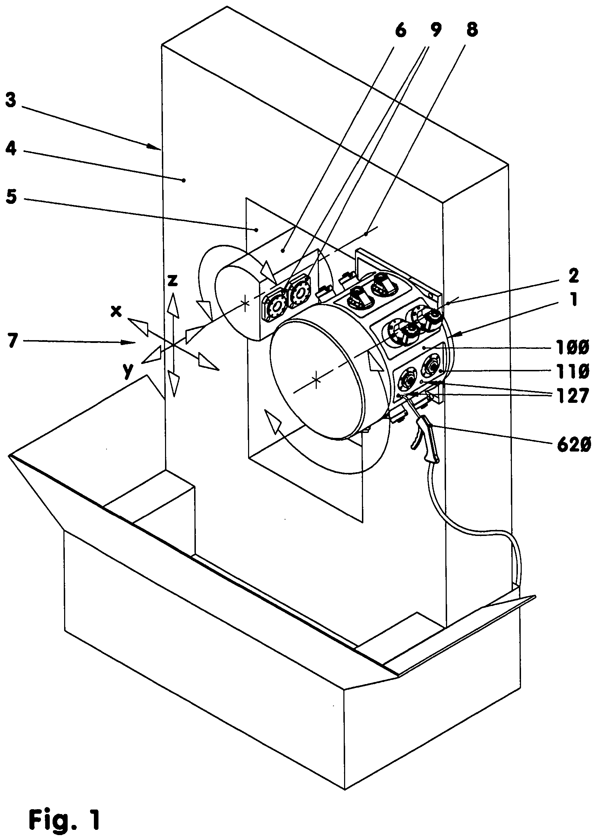

Die Figur 1 zeigt eine Werkzeugmaschine (3), die mit einem Werkstücktragschlitten (6) und mindestens einem Mehrebenenrohrmagazin (1) mit interner Spindel ausgestattet ist. Die Werkzeugmaschine (3) basiert im Ausführungsbeispiel auf einem Portalständer (4), an dessen Vorderwandung das Mehrebenenrohrmagazin (1) montiert ist. Das Mehrebenenrohrmagazin (1) hat einen Magazinrohrkörper (100), der um die Mittellinie (2) des Mehrebenenrohrmagazins (1) drehbar gelagert ist. Der Portalständer (4) hat eine Ständerausnehmung (5), aus der der Werkstücktragschlitten (6) herausragt. Letzterer, der zwei nebeneinander liegende Werkstücke (9) trägt, ist im Portalständer (4) so gelagert, dass er in x-, y- und z-Richtung (7) verfahrbar ist. Zudem hat der Werkstücktragschlitten (6) eine Rotationsmittellinie (8), um die er um z.B. 210 Winkelgrade verschwenken kann.

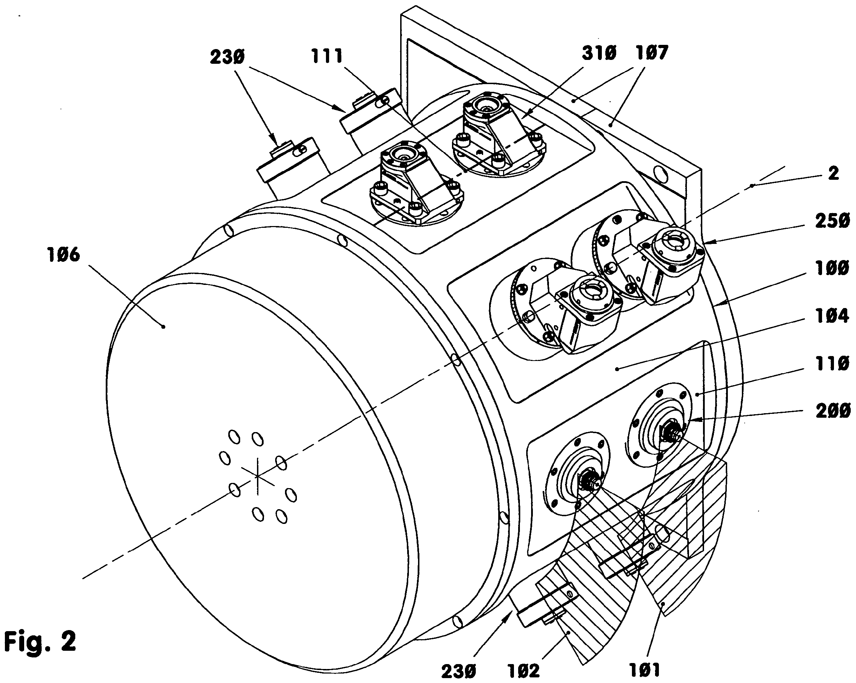

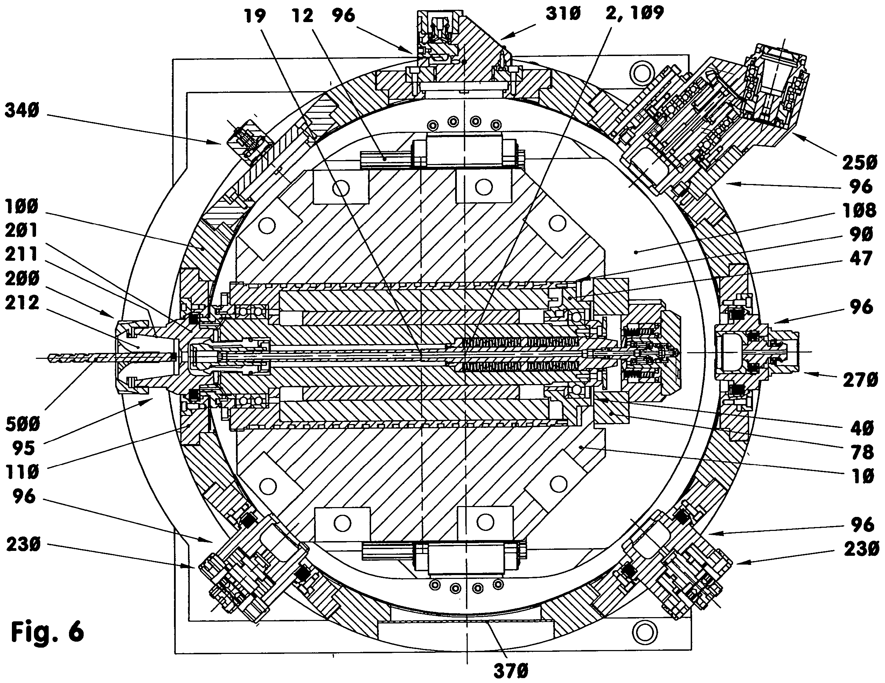

Das Mehrebenenrohrmagazin (1) wird in Figur 2 als einzelne Komplettbaugruppe mit verschiedenen Werkzeugaufnahmen (230, 250, 310) gezeigt. Zu sehen ist der rotierbare Magazinrohrkörper (100) mit seinem Magazinrohrstützdeckel (106). Der Magazinrohrkörper (100) liegt rückseitig dichtend an einer ggf. mehrgeteiligen, ortsfesten Basisplatte (107) an. Im z.B. gitterförmigen Magazinrohrkörper (100) sind hier acht Speicherdeckel (110) eingebaut. Jeder Speicherdeckel (110) bewahrt nur beispielhaft zwei baugleiche Werkzeugaufnahmen (200, 230, 250, 270, 310, 340) auf, vgl. Figur 6, so dass der Magazinrohrkörper (100) über zwei Werkzeugaufnahmeebenen (101, 102) verfügt. Nach Figur 2 sind in den Speicherdeckeln (110) - im Uhrzeigerdrehsinn von oben nach unten aufgereiht - zwei statische Werkzeugaufnahmen (310), zwei Werkzeugaggregate (250), zwei halbautomatische Werkzeugaufnahmen (270) und zwei dynamische Werkzeugaufnahmen (230) mit manueller Klemmung angeordnet.

Selbstverständlich kann das Mehrebenenrohrmagazin (1) entlang seiner Mittellinie (2) auch länger gebaut werden, so dass drei, vier oder mehr Werkzeugaufnahmeebenen entstehen.

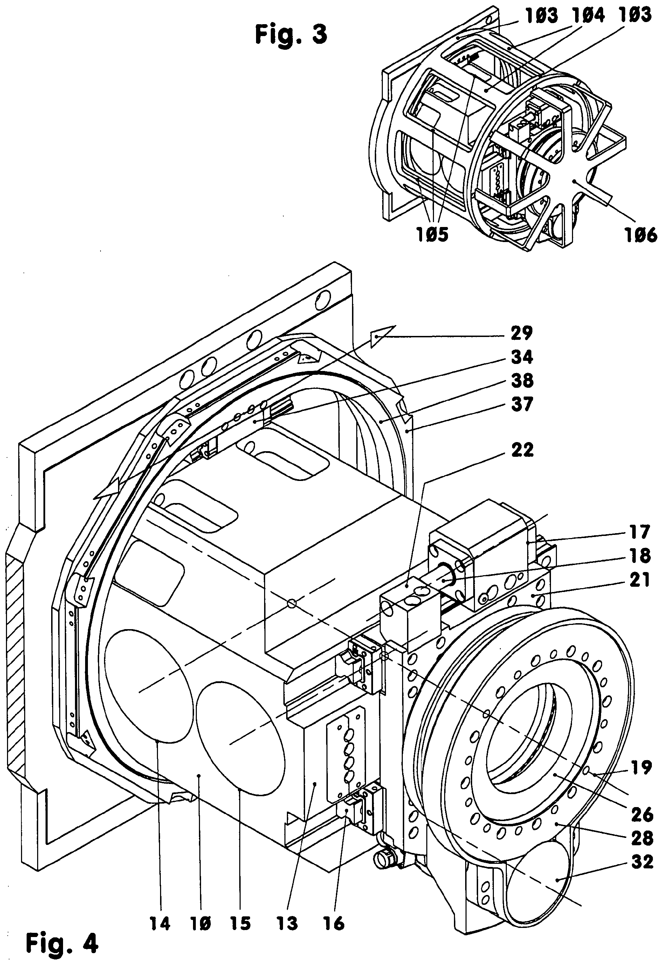

Das Mehrebenenrohrmagazin (1) hat als Basisteil einen z.B. aus GGG 40 gefertigten Zentralblock (10), vgl. Figur 4 und 6, der z.B. im Wesentlichen ein achteckiges gerades Prisma darstellt. Der Zentralblock (10) ist stirnseitig mit seiner rückseitigen Befestigungsseite (11) z.B. an dem ihn tragenden Portalständer (4) der Werkzeugmaschine (3) starr befestigt. Er hat am Portalständer eine große Auflagebasis bzw. -fläche. Die Höhe und/oder Breite der Befestigungsfläche des Prismas ist größer als 60% des Maximaldurchmessers des rotierbaren Magazinrohrkörpers (100), wodurch sich eine gute Abstützwirkung ergibt.

Der Zentralblock (10) weist im Ausführungsbeispiel zwei große Querausnehmungen (14, 15) auf, in denen je eine Arbeitsspindel (40) eingebaut ist.

An dem Zentralblock (10), vgl. Figuren 3 bis 5, sind ein Stirnschlitten (21) und zwei Lagerschlitten (35, 36) wälzgelagert geführt. Die Führungsrichtung (29) ist parallel zu den Mittellinien der Querausnehmungen (14, 15) orientiert. Der Stirnschlitten (21) trägt wälzgelagert einen Stirnschlittenflansch (26), während die Lagerschlitten (35, 36) wälzgelagert einen Ringflansch (37) aufnehmen. Beide Flansche (26, 37) sind über einen mit einem Magazinrohrstützdeckel (106) versehenen Magazinrohrkörper (100) miteinander formsteif verbunden. In Figur 3 ist der Magazinrohrstützdeckel (106) nur beispielhaft als Speichenkörper dargestellt. In der Regel ist er geschlossenwandig ausgeführt.

Der Stirnschlitten (21) ist auf z.B. vier Führungswagen (23) gelagert, von denen je zwei hintereinander angeordnet, eine auf der freien Stirnseite (13) des Zentralblocks (10) montierte Führungsschiene (16) umgreifen. Die beiden stirnseitigen Führungsschienen (16) haben einen führungswirksamen Abstand, der größer ist als 33% des Außendurchmessers des Magazinrohrkörpers (100). Im Bereich der Befestigungsseite (11) des Zentralblocks (10) lagern die Lagerschlitten (35, 36) auf zwei Führungswagen (34), wobei jeder Führungswagen (34) eine mit dem Zentralblock (10) verschraubte Führungsschiene (12) umgreift. Der führungswirksame Abstand dieser Führungsschienen (12) ist größer als 65% des Außendurchmessers des Magazinrohrkörpers (100).

Am Zentralblock (10) ist im oberen Bereich der freien Stirnseite (13) ein Linearantrieb (17) befestigt, der über eine Antriebsstange (18) seine Hubbewegung über einen Antriebsadapter (22) auf den Stirnschlitten (21) überträgt. Der Hub des Linearantriebs (17) beträgt z.B. 30 mm. Je nach Baugröße des Magazins kann er zwischen 15 und 50 mm liegen. Als Linearantrieb (17) wird beispielsweise eine hydraulisch arbeitende Zylinder-Kolben-Einheit verwendet. Alternativ kann das Antriebsmedium auch gasförmig sein. Auch ein elektromechanischer Antrieb in Form eines Getriebemotors oder dergleichen ist denkbar.

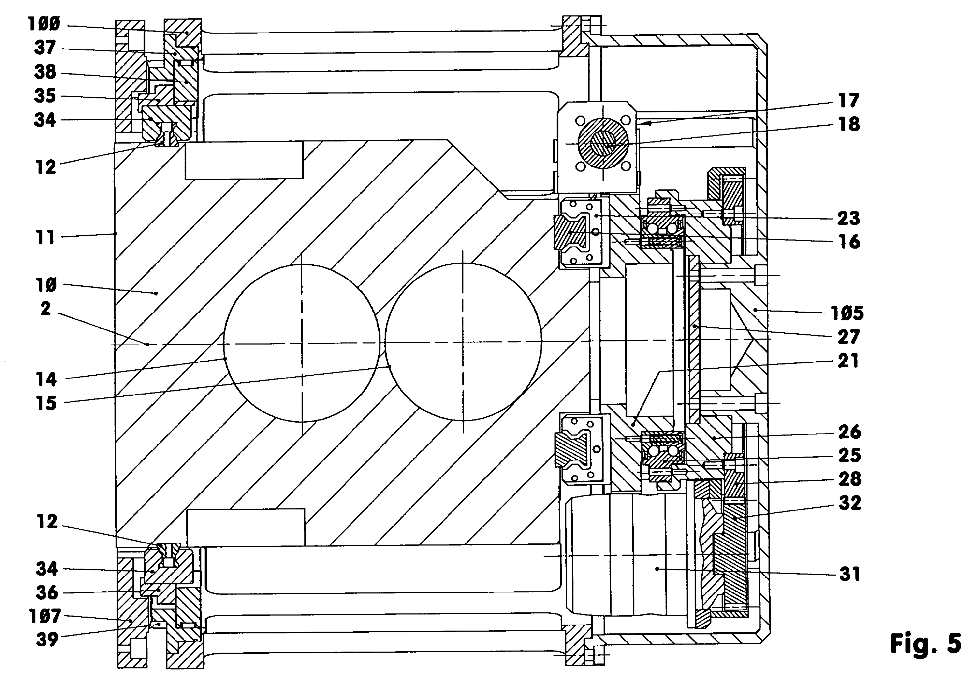

Im unteren Bereich des Stirnschlittens (21) ist ein elektromechanischer Rotationsantrieb (31) befestigt, vgl. Figur 5. Er umfasst mindestens ein Winkelmesssystem, ggf. einen Tachogenerator und ein Untersetzungsgetriebe. Der Getriebeausgang des Rotationsantriebs (31) ist ein Stirnrad (32), das eine zur Zentralblockmittellinie (2) parallele Mittellinie aufweist. Das Stirnrad (32) kämmt mit einem Abtriebsrad (28), das über einen Stirnschlittenflansch (26) und ein Wälzlager (25), z.B. ein zweireihiges, das Festlager bildende Flanschschulterlager, auf dem Stirnschlitten (21) gelagert ist. In der zentralen Bohrung des Stirnschlittenflansches (26) ist der Magazinrohrstützdeckel (106) zentriert positioniert und über einen Innendeckel (27) und Schrauben befestigt. Der Magazinrohrstützdeckel (106) ist mit dem Magazinrohrkörper (100) zentriert verschraubt.

Das hintere freie Ende des Magazinrohrkörpers (100) sitzt im Befestigungsbereich des Zentralblocks (10) verschraubt auf einem Ringflansch (37), der den Außenring eines Nadellagers bildet, vgl. Figur 5. Die umlaufenden Nadeln werden axial geführt in einem Nadellagerinnenring (38). An letzterem ist oben und unten jeweils ein kurzer Lagerschlitten (35, 36) befestigt, der jeweils über einen Führungswagen (34) auf der am Zentralblock (10) verschraubten Führungsschiene (12) lagert.

Der Ringflansch (37) trägt an seiner der Basisplatte (107) zugewandten Seite, z.B. in der Höhe der umlaufenden Nadeln des Nadellagers (38), einen Dichtring (39). Der Dichtring (39), der eine relativ formsteife Lippendichtung ist, liegt an einer fein bearbeiteten Dichtgleitfläche (98) der Basisplatte (107) an. Auf der ebenen Dichtgleitfläche (98) gleitet der Dichtring (39) zum einen quer zur Mittellinie (19) des Zentralblockes (10) in der Verschieberichtung (29) und zum anderen läuft er um die Mittellinie (109) des Magazinrohrkörpers (100) um. Die Dichtkante des Dichtrings (39) ist nach außen orientiert. Bei der Bewegung in Verschieberichtung (29) kann zur Erleichterung der Dichtungsgleitbewegung kurzzeitig der im Innenraum (108) anliegende Sperrluftdruck um den Faktor 1,5 bis 3 angehoben werden. Die Basisplatte (107) selbst ist nach Figur 4 im Bereich der Rückseite des Zentralblocks (10) befestigt. Die Montagefuge zwischen den Teilen (10) und (107) ist abgedichtet.

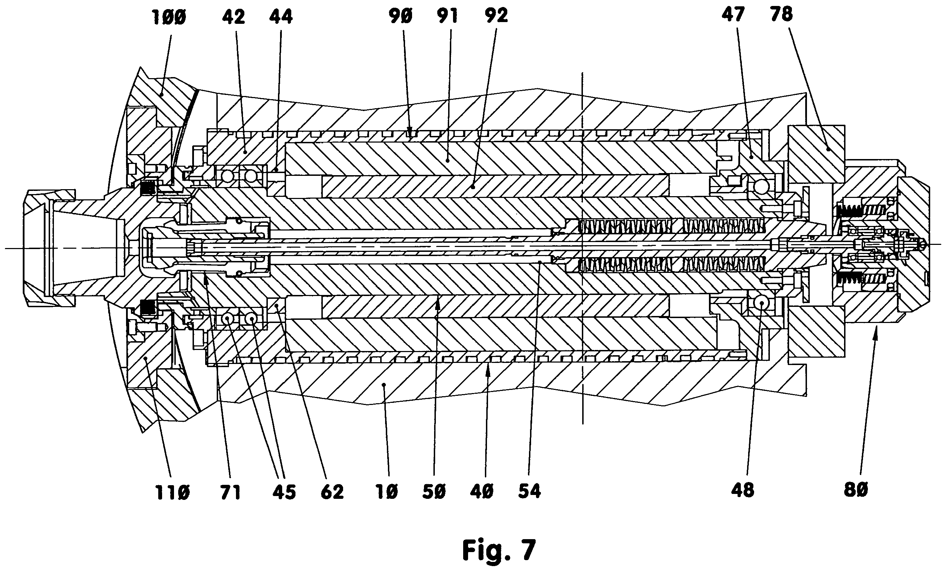

Die in der einzelnen Querausnehmung (14, 15,) des Zentralblocks (10) gelagerte Arbeitsspindel (40), vgl. Figuren 6 bis 9, hat ein rohrförmiges Motorengehäuse (42), in dessen radialer Außenwandung eine Spiralnut (43) eingearbeitet ist. In der Spiralnut (43), die durch die Innenwandung der Querausnehmung (14, 15) einen geschlossenen Kanalquerschnitt erhält, wird Kühlmittel für den Elektromotor (90) geführt. Das Motorengehäuse (42) hat im vorderen Bereich einen Innenflansch (44), an dem vorn z.B. zwei nebeneinander angeordnete spindellagernde Schulterlager (45), z.B. über einen Distanzring, axial anliegen. An der hinteren Stirnfläche des Innenflansches steht der Stator (91) des Antriebsmotors (90) an.

Das rohrförmige Motorengehäuse (42) lagert an seinem hinteren Ende einen Flanschdeckel (47) mit einem nach außen weisenden Innenbund an dem über eine Flanschhülse (49) ein weiteres Schulterlager (48) anliegt. Die Flanschhülse (49) weist mehrere axiale Sacklochbohrungen auf, in denen Schraubendruckfedern angeordnet sind, die den Außenring des Schulterlagers (48) über die Flanschhülse (49) nach außen pressen. Die eine Spindelwelle (50) lagernden Schulterlager (45, 48) befinden sich in O-Anordnung.

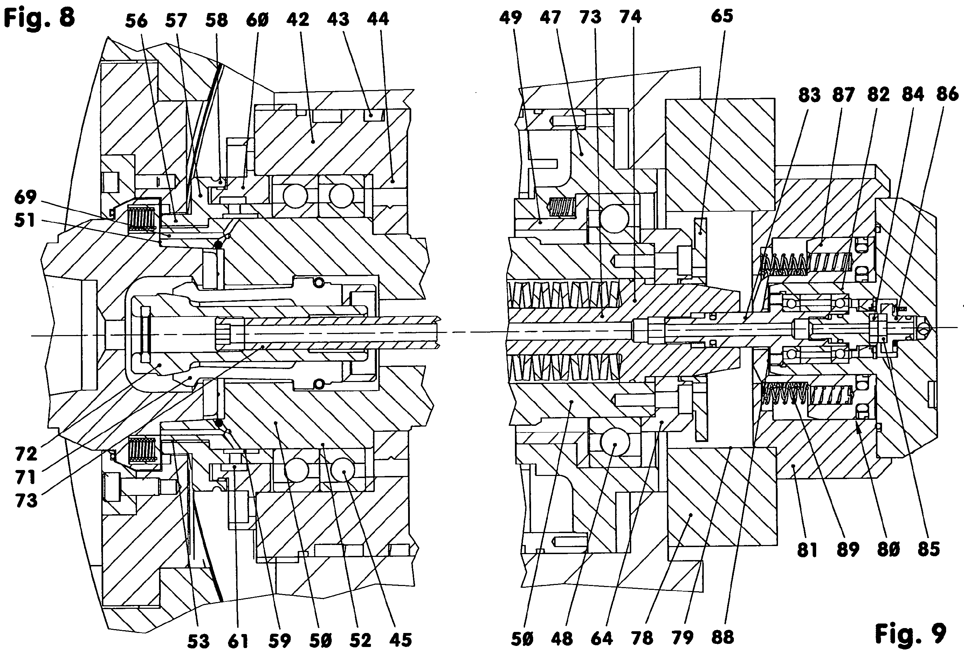

Die hohle Spindelwelle (50), deren Durchmesser sich von vorn nach hinten stufenweise verjüngt, weist vorn - im Bereich des Spindelkopfs - einen Lagersitz (52) für die Schulterlager (45) auf. Vor dem Lagersitz (52) hat sie ein Außengewinde (53), auf dem eine am Innenring des äußeren Schulterlagers (45) anliegende axial spannende Gewindehülse (56) aufgeschraubt ist. Letztere hat einen Gewindehülsenflansch (57), vgl. Figur 9, der einen Umgriff (58) zur Ausbildung einer Sperrluftlabyrinthdichtung aufweist. Der Umgriff (58) umgreift teilweise einen Bereich des vorderen Gehäusedeckels (60) mit Spiel. Der am Motorengehäuse (42) angeschraubte Gehäusedeckel (60) umgibt mit radialem Spiel die Gewindehülse (56). Im Spielbereich weist der Gehäusedeckel (60) eine radial orientierte innere Umlaufnut (61) auf, die pneumatisch mit einem nicht dargestellten Versorgungskanal des Spindelgehäuses (42) in Verbindung steht. In die Umlaufnut (61) münden mehrere radiale Bohrungen, die sich in der Gewindehülse (56) befinden. Diese Bohrungen münden ferner in eine Umlaufnut (59) der Gewindehülse (56).

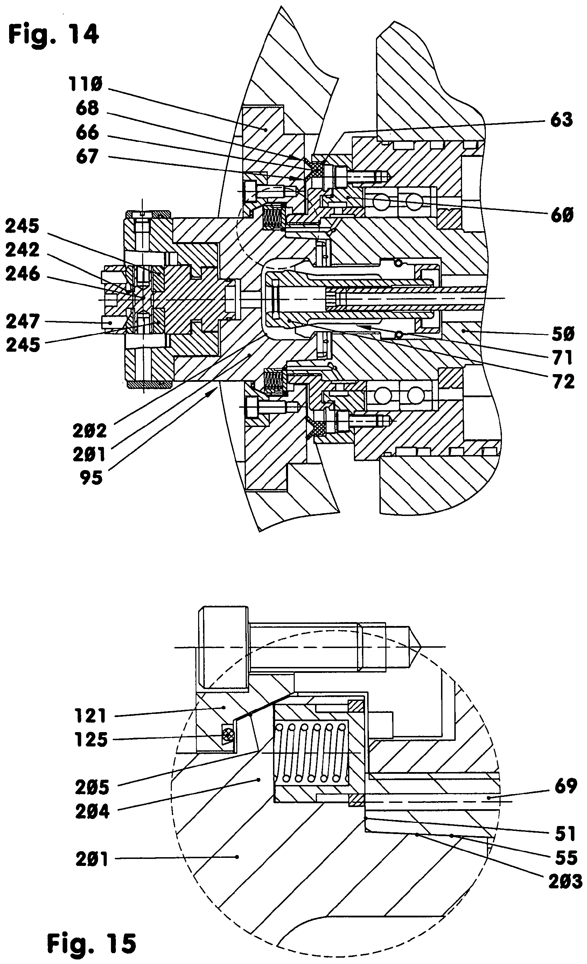

In Figur 14 wird eine Variante des Gehäusedeckels (60) gezeigt. Hier ist der Gehäusedeckel (60) in Richtung Speicherplatte (110) verlängert, um eine Dichtung in einer gehäusedeckelseitigen Eindrehung (63) einklemmen zu können. Die Dichtung ist eine Doppellippendichtung (66), die im Kontaktbereich zur radialen und axialen Wandung der Eindrehung (63) einen formsteifen Metallkranz aufweist, auf den die Doppellippendichtung (66) z.B. aufvulkanisiert ist. Die Doppellippendichtung (66) liegt mit einer äußeren und inneren Dichtlippe an dem sich in der Arbeitsposition befindenden Speicherdeckel (110) dicht an. Die äußere Dichtlippe (68)verhindert ein Entweichen der im Innenraum (108) vorhandenen Sperrluft über den zwischen dem Werkzeugschaft (201) und dem Speicherdeckel (110) vorhandenen Spalt. Die innere Dichtlippe (67) schützt den Innenraum (108) vor eindringendem Schmutz und/oder z.B. vor unter höherem Druck stehenden spindelseitigen Kühl-und/oder Schmiermittel. Ggf. kann die Dichtung (66) auch mit nur einer Dichtlippe ausgestattet sein.

Stirnseitig weist die Spindelwelle (50) vorn eine zentrale konische Ausnehmung (55) auf, die zu einer die Spindelwelle (50) in Längsrichtung durchlaufende Stufenbohrung (54) gehört. Die konische Ausnehmung (55) steht über mehrere, z.B. schräg verlaufende Querbohrungen mit der Umlaufnut (59) der Gewindehülse (56) in Verbindung. Auf die Querbohrungen treffen jeweils Längsbohrungen, die von der planen Stirnfläche (51) der Spindelwelle (50) ausgehen.

Auf der Spindelwelle (50) sitzt hinter dem vorderen Lagersitz (52) auf kleinerem Durchmesser ein Auswuchtring (62) per Querpresssitz. Ihm folgt der dem Stator (91) gegenüberliegende Rotor (92).

Auf dem hinteren Ende der Spindelwelle (50) sitzt aufgeschraubt eine Spannhülse (64), an der sich der Innenring des hinteren Schulterlagers (48) abstützt. An der Spannhülse (64) ist ein für die Drehwinkelbestimmung verwendetes Messzahnrad (65) verschraubt.

In der Stufenbohrung (54) der Spindelwelle (50) sitzt im Bereich des Spindelkopfes eine tellerfederbelastete Spannzange (71), deren Zugdorn (72), nach Figur 8, vorn über die Stirnfläche (51) der Spindelwelle (50) übersteht. Der Zugdorn (72) ist an einer Zugankerschraube (73) befestigt, auf der die Tellerfedern aufgereiht sind. Das hintere Ende der Zugankerschraube (73) bildet ein Tellerfederstempel (74).

Das hintere Ende der Spindelwelle (50) ragt aus dem Zentralblock (10) heraus. Es wird dort zumindest teilweise umgeben von einer Distanzplatte (78). Die Distanzplatte (78) hat eine Durchgangsbohrung (79), deren Mittellinie deckungsgleich zur Mittellinie der Spindelwelle (50) verläuft. In der Durchgangsbohrung (79) ist eine in einem z.B. zumindest annähernd quaderförmigen Gehäuse (81) untergebrachte Schmiermitteldrehdurchführung (80) zentriert angeordnet. Im Gehäuse (81) ist ein einseitig hydraulisch betätigbarer Ringkolben (87) angeordnet, der zur Spindelwelle (50) hin einen Boden (88) mit zentraler Bohrung aufweist. Wird die spindelwellenferne Kolbenrückseite mit Hydrauliköl beaufschlagt, legt sich der Boden (88) am Tellerfederstempel (74) der Spannvorrichtung (70) an, um den Zugdorn (72) in Öffnungsrichtung zu verschieben. Bei einer Freigabe des Hydrauliköldrucks schieben mehrere sich am Gehäuse (81) abstützende Schraubendruckfedern (89) den Ringkolben (87) zurück, damit die Spannzange (71) federbelastet wieder in ihre Schließstellung übergehen kann.

Das Gehäuse (81) weist einen Deckel auf, der einen zentralen - den Ringkolben (87) führenden - Hohlzapfen (82) trägt. Im verdrehgesicherten Hohlzapfen (82) sitzt wälzgelagert eine hohle Schmiermittelübergabewelle (83), die in die zentrale Bohrung des Tellerfederstempels (74) hineinragt. Die Schmiermittelübergabewelle (83) ist gegenüber der Bohrung des längsverschiebbaren Tellerfederstempels (74) mit einem Dichtring abgedichtet.

Die rotierende Schmiermittelübergabewelle (83) weist rückseitig einen axial orientierten Gleitdichtring (84) auf. Letzterer liegt axial an einem drehfest fixierten, federbelasteten Gleitdichtring (85) an. Der Gleitdichtring (85) ist stirnseitig an einer längsverschiebbaren Hülse (86) befestigt. Über diese Hülse (86) wird aus dem Deckel, den zentralen Hohlräumen der Schmiermittelübergabewelle (83) und der Zugankerschraube (73) das gas- und/oder flüssige Kühl- und/oder Schmiermittel zugeführt. Auf diese Weise kann jede dynamische oder statische Werkzeugaufnahme das geforderte Kühl- und/oder Schmiermittel zugeführt bekommen.

Der Magazinrohrkörper (100), er ist aus einer Aluminiumlegierung gefertigt, hat an seinem Umfang - entsprechend der Anzahl seiner Werkzeugaufnahmereihen (111) - große im Wesentlichen rechteckige Ausnehmungen (105) zur Lagerung von Speicherdeckeln (110), so dass er die Form eines zylindrischen Käfigs hat, der aus zwei stirnseitigen Ringen (103) und z.B. acht, diese verbindenden Längsstreben (104) besteht. Im Ausführungsbeispiel beträgt der Außendurchmesser 640 mm bei einer Wandstärke von 20 mm. Das polare Massenträgheitsmoment des Magazinrohrkörpers (100), einschließlich des Magazinrohrstützdeckels (106), beträgt ca. 4,3 kgm².

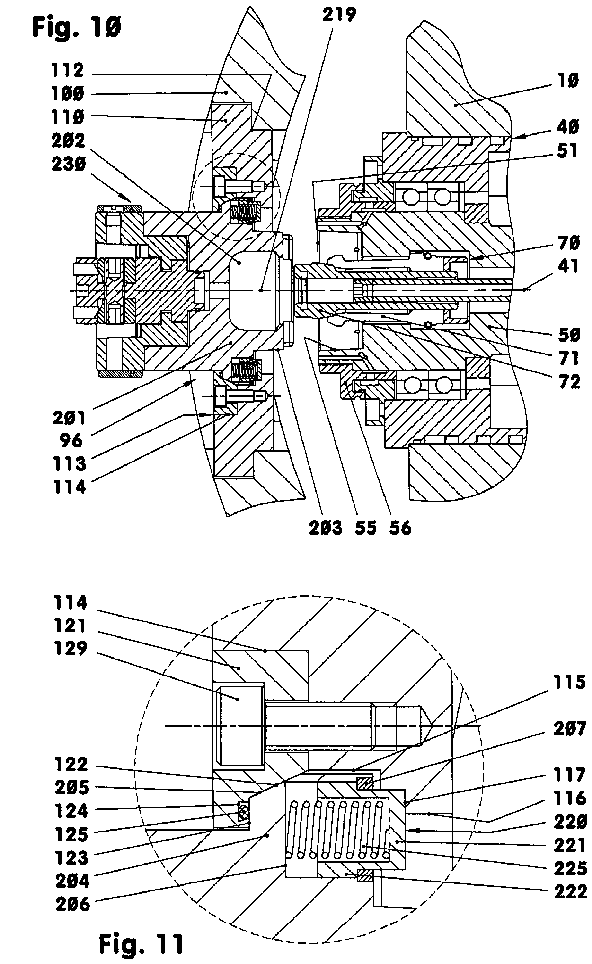

Der im Wesentlichen quaderförmige Speicherdeckel (110) hat, nach den Figuren 10 und 11, rückseitig eine z.B. umlaufende Einfräsung (112), die u.a. der Zentrierung und/oder Abdichtung dient. Jeder mit z.B. sechs Schrauben an dem Magazinrohrkörper (100) befestigte Speicherdeckel (110) hat stirnseitig so viele Werkzeugträgerstufenbohrungen (113), wie der Magazinrohrkörper (100) Werkzeugaufnahmeebenen (101, 102) hat. Im gezeigten Ausführungsbeispiel sind das zwei. In dem einzelnen Speicherdeckel (110) ist nach Figur 6 beispielsweise eine dynamische Werkzeugaufnahme (200), eine dynamische Werkzeugaufnahme (270) mit halbautomatischem Werkzeugwechsel, ein Werkzeugaggregat (250), eine statische Werkzeugaufnahme (310), ein Parallelgreifer (340) oder ein Blinddeckel (370) gelagert. Der Speicherdeckel (110) hat - wie die Ausnehmungen (105) - vier gestuft abgerundete Eckkanten, deren Mittellinien parallel zu den Mittellinien der Werkzeugträgerstufenbohrungen (113) orientiert sind.

Dazu stellt die erste Stufe der Werkzeugträgerstufenbohrung (113) eine Plansenkung (114) zur zentrierten Aufnahme z.B. eines Halteringes (121), einer Halteplatte (299, 361) oder eines Blinddeckels (370) dar. Auf die Plansenkung (114) folgt ein Radialspielabschnitt (115). An Letzterem grenzt abschließend der zylindrische Endabschnitt (116) an, durch den z.B. bei der Verwendung von dynamischen Werkzeugaufnahmen (200, 230, 250, 270) die Gewindehülse (56) der Spindelwelle (50) mit Spiel hindurchragt. Jeder Endabschnitt (116) hat mindestens drei im Querschnitt zumindest annähernd sichelförmige Teilsenkungen (117), in die zumindest bei den dynamischen Werkzeugaufnahmen (200, 230, 250, 270) entsprechende Teilungspositionierelemente (220) eingreifen. Jede Teilsenkung (117) hat z.B. einen Durchmesser von 10 mm. Der Zylinder, auf dem die Mittellinien der Teilsenkungen (117) um die Mittellinie der Werkzeugträgerstufenbohrung (113) liegen, ist z.B. 4 mm kleiner als der Innendurchmesser des Endabschnitts (116).

Jeder Speicherdeckel (110) kann über eine gas- und/oder flüssige Kühl- und/oder Schmiermittelzufuhr verfügen, um im Speicherdeckel (110) eingebaute nach außen abstrahlende Kühl- oder Schmiermitteldüsen - zur Kühlung oder Schmierung der Bearbeitungsstelle - zu versorgen. Hierzu wird der Speicherdeckel (110) an dem Magazinrohrkörper (100) oder dem Zentralblock (10) hydraulisch angeschlossen.

Werden im Werkstücktragschlitten (6), vgl. Figur 1, z.B. gleichartige Werkstücke (9) bearbeitet, können beim verschleißbedingten Werkzeugaustausch oder beim Umrüsten die Werkzeugaufnahmen, einschließlich der Werkzeuge, diese zeitsparend komplett mit dem jeweiligen Speicherdeckel (110) ausgetauscht werden. Werden eine oder mehrere Werkzeugaufnahmereihen (111) für die Bearbeitung einer Serie nicht benötigt, werden der oder die Speicherdeckel (110) durch dünnwandige, leichte Blinddeckel (370) ersetzt.

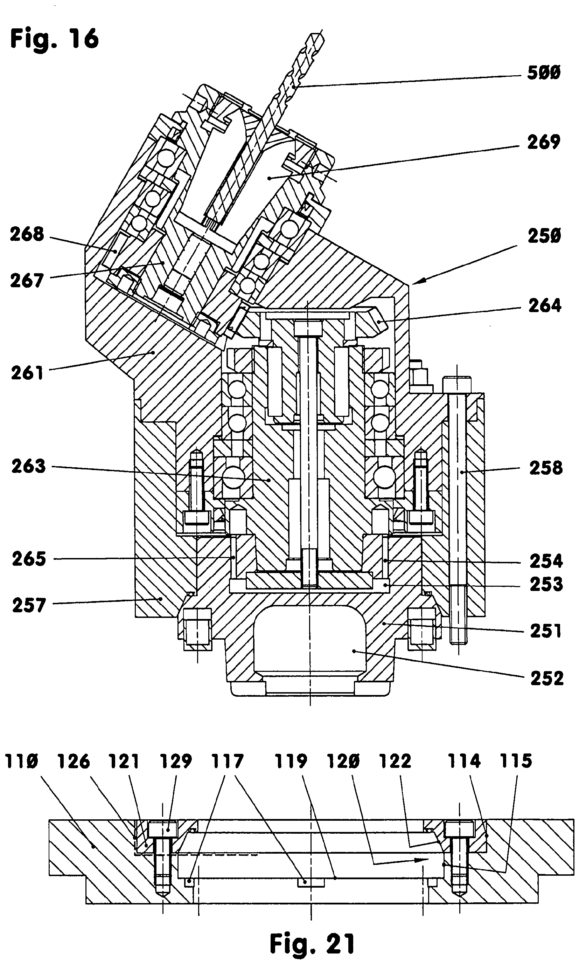

Der am Speicherdeckel (110) mittels Schrauben (129) befestigte Haltering (121), mit dem z.B. bei der dynamischen Werkzeugaufnahme (230) der Werkzeugaufnahmeschaft (201) mit axialem und radialem Spiel gehalten wird, hat im Bereich seiner zentralen Ausnehmung eine konische Senkung (122), deren Kegelwinkel z.B. bei 50 Winkelgraden liegt. Auf dem Grund (123) der Senkung (122) befindet sich eine Umlaufnut (124) mit Hintergriff zur Aufnahme eines Dichtringes (125). Der Haltering (121) bildet zusammen mit dem Speicherdeckel (110) eine umgriffsartige Aufnahmeform (120), vgl. Figur 21, mit der sie mit Spiel den jeweiligen Flansch (204) der eingelagerten dynamischen Werkzeugaufnahmen (200, 230, 250, 270) umgibt. Im Wesentlichen wird das Magazinspiel des Flansches (204) durch die konische Senkung (122) und den z.B. planen Fangbund (119) begrenzt.

Zur Befestigung von statischen Werkzeughaltern (310, 340) benötigt der Speicherdeckel (110) nur die Plansenkung (114). Letztere stellt eine flanschartige Aufnahmeform (126) dar, vgl. Figur 21.

Im Speicherdeckel (110) werden die dynamischen Werkzeugaufnahmen (200, 230, 250, 270) gelagert, sofern sich ihre Werkzeuge (500) in einer Magazinposition befinden. Eine einfache dynamische Werkzeugaufnahme (200), vgl. Figuren 6 und 10, umfasst u.a. einen Werkzeugaufnahmeschaft (201) der - nach dem Einspannen in die Spindelwelle (50) - mit seinem Konus (203) in die konische Ausnehmung (55) der Spindelwelle (50) mittels der Spannvorrichtung (70) eingezogen wird. Der Werkzeugaufnahmeschaft (201) hat dazu eine zentrale Ausnehmung (202) mit Hintergriff. Hinter Letzterem verkrallt sich die Spannzange (71) der Spannvorrichtung (70).

Der Werkzeugaufnahmeschaft (201) weist außen im hinteren Bereich einen Flansch (204) auf, vgl. Figur 11, mit dem er - auch ohne an der Spindelwelle (50) angekuppelt zu sein - in der entsprechenden Ausnehmung (113) des Speicherdeckels (110) fixiert ist. Der zylindrische Flansch (204) ist vorderseitig angefast, so dass dort eine kegelstumpfmantelförmige Zentrierfläche (205) entsteht. Ihr Kegelwinkel entspricht dem Kegelwinkel der konischen Senkung (122) des Halterings (121). In der rückseitigen Stirnfläche des Flansches (204) befinden sich mindestens zwei Sacklochbohrungen (206), in der Regel können es auch 16 oder mehr Stücke sein, mit z.B. einem planen Bohrungsgrund, vgl. Figur 11. In jeder Sacklochbohrung (206) sitzt gleitfähig ein topfförmiges, z.B. eine Schraubendruckfeder (225) oder ein mehrere Tellerfedern lagerndes Teilungspositionierelement (220). Das Teilungspositionierelement (220) ist in der Sacklochbohrung (206) so eingesetzt, dass sein Boden (221) zur Spindelwelle (50) hin orientiert ist. Die Schraubendruckfeder (225) versucht hierbei, das Teilungspositionierelement (220) aus der Sacklochbohrung (206) herauszudrücken. Um ein Herausfallen der Teilungspositionierelemente (220) zu verhindern, haben diese einen Kragen (222), mit dem sie sich an den Bohrungsrändern eines am Flansch (204) rückseitig angeschraubten Anschlagringes (207) abstützen. Die Bohrungsränder gehören zu den Bohrungen, aus denen die Teilungspositionierelemente (220) herausragen, vgl. Figur 11. Anstelle des Anschlagringes (207) können auch kurze Laschen verwendet werden, die jeweils beidseits der einzelnen Bohrung (206) - in Umfangsrichtung des Bohrbildes - mit dem Flansch (204) verschraubt sind.

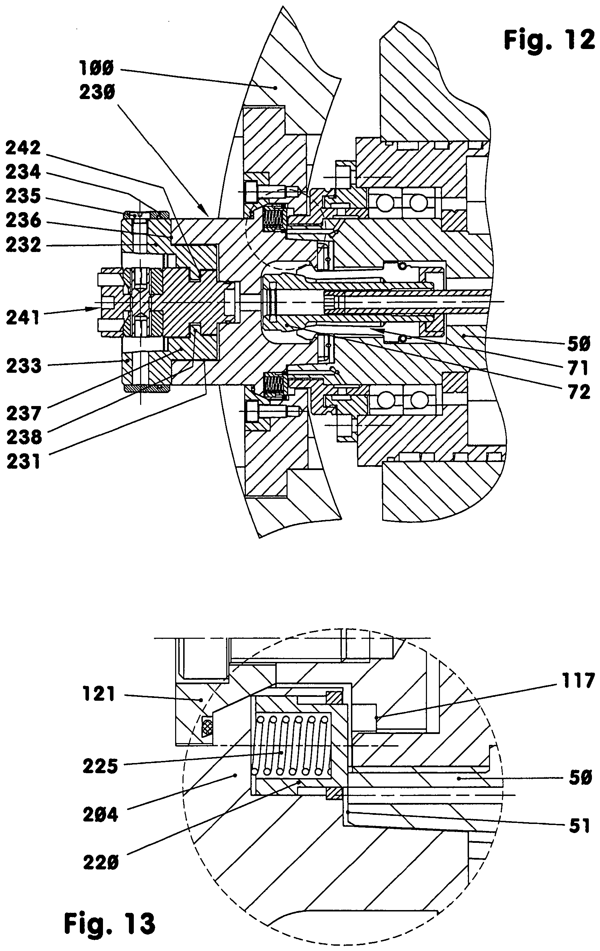

Nach Figur 11, vgl. auch Figur 13, liegen die sichelförmigen Teilsenkungen (117) des Speicherdeckels (110) koaxial gegenüber den Sacklochbohrungen (206), so dass die Teilungspositionierelemente (220) in den Teilsenkungen (117) zumindest radial anliegen. Dadurch ist der Werkzeugaufnahmeschaft (201) zum einen verdrehsicher im Magazinrohrkörper (100) positioniert und zum anderen drücken die Schraubendruckfedern (225) den Flansch (204) über die Teilungspositionierelemente (220) zentrierend in den Haltering (121). Zugleich wird die vordere, plane Stirnfläche des Flansches (204) gegen den Dichtring (125) gepresst. Der Grund (123) der Senkung (122) hat gegenüber der vorderen, planen Stirnfläche des Flansches (204) ein geringes Spiel.

Der Innenraum (108) des zweiteiligen Magazinrohrkörpers (100, 106) ist gegenüber der Umgebung weitgehend abgedichtet und steht unter 0,5 × 10⁵ Pa Sperrluftüberdruck. Die Sperrluft drückt die Werkzeugaufnahmen (200, 230, 250, 270) zusätzlich in die konischen Zentrierungen der Halteringe (121).

Gemäß Figur 6 weist der Werkzeugaufnahmeschaft (201) der einfachen, dynamischen Werkzeugaufnahme (200) außerhalb des Magazinrohrkörpers (100) z.B. eine zentrale konische Ausnehmung (211) auf, in der eine Spannzange (212) zum Spannen eines Spiralbohrers (500) oder dergleichen eingesetzt ist.

In den Figuren 10 bis 15 wird das Spannen einer dynamischen Werkzeugaufnahme (230) in der Spindelwelle (50) schrittweise dargestellt. Die Figur 10 zeigt den Magazinrohrkörper (100) in seiner Rotationsposition. Um zu der dargestellten Position zu gelangen, kann er eine 360-Winkelgradrotation um die Mittellinie (2) und/oder (19) durchgeführt haben, ohne den Zentralblock (10) oder die Arbeitsspindel (40) berührt zu haben. In der dargestellten Position fluchten die Mittellinien (219, 41) der Werkzeugaufnahme (230) und der Arbeitsspindel (40). Der Zugdorn (72) der Spannvorrichtung (70) steht mehrere zehntel Millimeter vor der Öffnung des Werkzeugaufnahmeschafts (201) der Werkzeugaufnahme (230). Die Hakenzungen der Spannzange (71) liegen am Schaft des nach vorn geschobenen Zugdorns (72) an.

Nach Figur 11 liegt die kegelstumpfmantelförmige Zentrierfläche (205) des werkzeugaufnahmeseitigen Flansches (204) an der kegelstumpfmantelförmigen Fläche der Senkung (122) des Halterings (121) dicht an. Die Teilungspositionierelemente (220) liegen formschlüssig in den Teilsenkungen (117) des Speicherdeckels (110) an.

Gemäß Figur 12 wurde der Magazinrohrkörper (100) zusammen mit dem Speicherdeckel (110) und der Werkzeugaufnahme (230) in einem Hub, um z.B. 30 mm, in Richtung (29) auf die Spindelwelle (50) zubewegt. Die Spannzange (71) und der Zugdorn (72) ragen in die Hintergriffsausnehmung (202) des Werkzeugaufnahmeschafts (201) hinein, jedoch ohne die Spannzange (71) gespannt zu haben. Nach Figur 13 liegt weder die Stirnfläche (51) der Spindelwelle (50) am Flansch (204) an, noch berührt die Wandung der konischen Ausnehmung (55) den Außenkonus (203) des Werkzeugaufnahmeschafts (201).

Zugleich wurden die Teilungspositionierelemente (220) durch den Kontakt mit der Stirnfläche (51) gegen die Wirkung der Schraubendruckfedern (225) in eine hintere Position geschoben, so dass sie nicht mehr in die Teilsenkungen (117) des Speicherdeckels (110) eingreifen. Die Verdrehsicherung der Werkzeugaufnahme (230) gegenüber dem Speicherdeckel (110) ist aufgehoben.

Der Flansch (204) hat seine Position gegenüber dem Haltering (121) beim Übergang von Figur 11 zu Figur 13 nicht geändert.

Nach Figur 14 wurde der Zugdorn (72) in die Spindelwelle (50) hineingezogen. In der Folge haben sich die Hakenzungen der Spannzange (71) am Hintergriff der Ausnehmung (202) angelegt und gespreizt. Aufgrund der Keilwirkung der Spannzange im Hintergriffsbereich wird die Werkzeugaufnahme (230) wenige zehntel Millimeter gegen die Stirnfläche (51) der Spindelwelle (50) gezogen. Dabei kontaktiert die Wandung der konischen Ausnehmung (55) den Außenkonus (203) des Werkzeugaufnahmeschafts (201). Ferner legt sich der Flansch (204) an der Stirnfläche (51) an, wodurch sich eine zur Stirnfläche (51) führende Druckluftbohrung (69) zumindest weitgehend verschließt. Der in der Druckluftbohrung (69) anstehende Prüfdruck erkennt das erfolgreiche Herstellen der Schnittstelle Spindelwelle/Werkzeugaufnahme.

Durch das Zurückziehen der Werkzeugaufnahme (230) in Richtung Spindelwelle (50) um z.B. 0,3 bis 0,5 mm, löst sich der Flansch (204) ringsherum, vgl. Figur 15. Er liegt nun weder am Haltering (121) noch am Speicherdeckel (110) an. Auch der Dichtring (125) kontaktiert den Flansch (204) nicht. Die Werkzeugaufnahme (230) ist somit gegenüber dem Speicherdeckel (110) frei beweglich. Der Magazinrohrkörper (100) hat nun weder eine Trage- noch eine Führungsposition. Der zwischen der Werkzeugaufnahme (230) und dem Speicherdeckel (110) vorhandene Spalt hat die Funktion einer Labyrinthdichtung, über die geringe Volumina Sperrluft - zur Vermeidung von eindringendem Kühl- und/oder Schmiermittel oder sonstigem Schmutz - entweichen.

Die dynamische Werkzeugaufnahme (230) mit integriertem Handspanner, vgl. Figuren 10, 12, 14, umfasst einen Werkzeugaufnahmeschaft (201). Letzterer hat in der äußeren Stirnseite eine zentrale Stufenbohrung (231). In dem großen Bohrungsabschnitt mit dem größten Durchmesser ist eine Konushülse (232) eingesetzt.

Die Konushülse (232) ist ein gestufter rohrförmiger Körper mit einem Konusabschnitt (233) und einem Bajonettabschnitt (237). Die konische Innenwandung des Konusabschnitts (233) dient der Werkzeugaufnahme. Auf der radialen Außenwandung des Konusabschnitts (233) ist ein um mehrere Winkelgrade verstellbarer Ringdeckel (234) geführt. Zur Führung an der Konushülse (232) hat er z.B. zwei Führungslanglocher, vgl. Figur 2. In Letztere ragen die Köpfe der Führungsschrauben (235) hinein.

Der Bajonettabschnitt (237) ragt mit einem mehrere zehntel Millimeter großen Spiel in den großen Bohrungsabschnitt der Werkzeugaufnahme (230) hinein. Die im Wesentlichen zylindrische Innenwandung trägt mindestens einen Bajonettsteg (238) zur Fixierung eines Handspanneinsatzes (241).

Die Konushülse (232) liegt über ihren Planbund (236) an der äußeren Stirnseite des Werkzeugaufnahmeschafts (201) auf. Dort ist sie mit parallel zur Mittellinie der Werkzeugaufnahme (230) ausgerichteten Schrauben befestigt. Im großen Bohrungsabschnitt befinden sich mindestens drei äquidistant am Umfang verteilte Gewindestifte tragende Gewindebohrungen. Mit den Gewindestiften wird die Konushülse (232) - zur Optimierung des Werkzeugrundlaufs - radial gegenüber der Mittellinie der Werkzeugaufnahme (230) ausgerichtet.

In der zylindrischen Innenwandung des Bajonettabschnitts (237) umgreift der Handspanneinsatz (241) die Bajonettstege (238). Der Handspanneinsatz (241), vgl. Figur 14, ist ein bolzenförmiger Körper, der an seinem hinteren Ende z.B. zwei Stege zum Hintergreifen der Bajonettstege (238) der Konushülse (232) aufweist. Im mittleren Bereich hat er zwei einander gegenüberliegende Quernuten (242). In jeder Quer-nut (242) sitzt ein Spannbacken (245). Jeder Spannbacken (245) hat in seinem normal zur Mittellinie der Werkzeugaufnahme (230) gelegenen Querschnitt die Form eines Kreisabschnitts.

In dem zwischen den Quernuten (242) liegenden Steg befindet sich eine Querbohrung, in die ein Sondergewindebolzen (246) eingelegt ist. Koaxial zu dieser Querbohrung befinden sich in den Spannbacken (245) entsprechende Gewindebohrungen. Der Sondergewindebolzen (246) trägt auf der einen Seite ein Rechtsgewinde und auf der anderen ein Linksgewinde. Jedes Gewinde ragt in einen Spannbacken (245) hinein. Der Sondergewindebolzen (246) hat stirnseitig z.B. eine Werkzeugausnehmung für einen Imbus-Schraubendreher.

Durch ein Verdrehen des Sondergewindebolzens (246) werden die Spannbacken (245) synchron zueinander aus- oder eingefahren. Jeder Spannbacken (245) weist zudem eine Keilfläche auf, an der je ein Ausdrückstift (247) mit seiner Keilfläche anliegt. Die Ausdrückstifte (247), die parallel zur Mittellinie der Werkzeugaufnahme (230) orientiert sind, ragen bei zusammengefahrenen Spannbacken (245) aus der Stirnseite des Handspanneinsatzes (241) heraus.

Zum manuellen Spannen des Werkzeuges mit HSK-Werkzeugschaft wird das Werkzeug an der konischen Innenwandung des Konusabschnittes (233) angelegt. Durch ein entsprechendes Verdrehen des Ringdeckels (234) und des Werkzeuges werden eine Werkzeugausnehmung des Sondergewindebolzens (246), eine Bohrung des HSK-Werkzeugschafts und eine Bohrung des Ringdeckels (234) zur Deckung gebracht. Mit einem anschließenden Drehen des Sondergewindebolzens (246) werden die Spannbacken (245) gegen die Innenkontur der Hintergriffsausnehmung des HSK-Werkzeugschafts gepresst. Das Werkzeug sitzt nun fest in der Werkzeugaufnahme (230).

Diese Werkzeugaufnahme (230) ermöglicht eine freie Schnittstellenwahl. Beispielsweise können HSK^{®} -, Capto^{®}-, BENZ Solidfix^{®}-Schnittstellen und dergleichen realisiert werden.

In Figur 16 ist ein auswechselbares Werkzeugaggregat (250) gezeigt. Das Werkzeugaggregat (250), das zur Gruppe der dynamischen Werkzeugaufnahmen gehört, nimmt in einer Spannzange (269) einen Spiralbohrer (500) auf, dessen Mittellinie um 30 Winkelgrade gegenüber der Mittellinie der Antriebswelle (263) geneigt ist.

Das Werkzeugaggregat (250) lagert in einem Aggregategehäuse (261) wälzgelagert die Antriebswelle (263) und eine die Spannzange (269) tragende Abtriebswelle (267). Die Antriebswelle (263) treibt über ein Kronenrad (264) ein Stirnrad (268) der Abtriebswelle (267) an.

Das Aggregategehäuse (261) ist über einen rohrförmigen Haltering (257) mittels der Schrauben (258) mit dem entsprechenden Speicherdeckel (110) verschraubt, vgl. Figuren 2 und 6. Der vom rohrförmigen Haltering (257) und dem Speicherdeckel (110) umgriffene Werkzeugaufnahmeschaft (251) hat gegenüber seiner HSK-Ausnehmung (252) eine mit einer Innenkerbverzahnung (254) versehene Bohrung (253). Diese Innenkerbverzahnung (254) greift in eine an der Antriebswelle (263) befestigte Außenkerbverzahnung (265) ein.

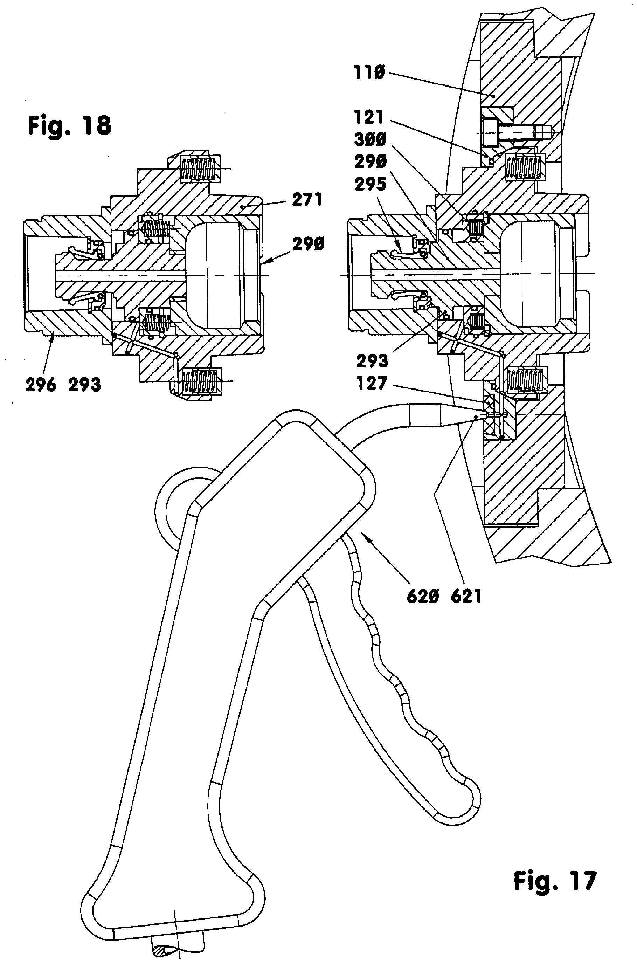

In den Figuren 17, 18 und 22 ist eine erste Variante einer dynamischen Werkzeugaufnahme (270) gezeigt, mit der halbautomatisch ein Werkzeug, das z.B. eine HSK-Schnittstelle (296) aufweist, eingesetzt und vorgespannt werden kann. Das Einsetzen und Vorspannen übernimmt entweder ein Handhabungsgerät oder ein Maschinenbediener. Letzterer benötigt dazu z.B. zusätzlich eine Druckluftblaspistole (620), vgl. Figuren 1 und 17.

Die Werkzeugaufnahme (270) hat einen Werkzeugaufnahmeschaft (271). Der Außenkonus (203), der Flansch (204), der Haltering (121) und die Teilungspositionierelemente (220) sind schon aus den zuvor beschriebenen dynamischen Werkzeugaufnahmen (200, 230) bekannt, vgl. Figuren 10 bis 15. Allerdings hat hier der Werkzeugaufnahmeschaft (271) spindelwellenseitig eine zentrale Stufenbohrung (272), in der ein mehrteiliger Spannadapter (290) geführt ist. Die Stufenbohrung (272) hat eine Spannhülsenführzone (273) und eine im Durchmesser kleinere Zylinderzone (277). Der mehrteilige Spannadapter (290) besteht aus einer Spannhülse (291), einem Kolbenstangenabschnitt (292), einem Kolben (293) und einem Spannzangenhalteabschnitt (294). Die Spannhülse (291) umfasst die mit dem Hintergriff versehene Ausnehmung (202). Mit ihrer Außenkontur ist sie mit geringem Spiel in der Stufenbohrung (272) geführt.

An die Spannhülse (291) schließt sich der z.B. eingeschraubte Kolbenstangenabschnitt (292) an. Auf letzterem sitzt ein Vorspannring (300), dessen radiale Außenwandung an der Spannhülsenführzone (273) anliegt. Zudem stützt sich der Vorspannring (300) an der zwischen der Spannhülsenführzone (273) und der Zylinderzone (277) gelegenen Planfläche (276) ab. Der Vorspannring (300) wird axial in dieser Position durch einen Sicherungsring (278) gehalten, der in einer in der Spannhülsenführzone (273) angeordneten Sicherungsringnut (274) sitzt. Zwischen der Sicherungsringnut (274) und der Planfläche (276) befindet sich eine Dichtungsringnut (275), in der ein O-Ring (279) angeordnet ist. Um den Vorspannring (300) auch gegenüber dem Kolbenstangenabschnitt (292) abzudichten, trägt der Vorspannring (300) in seiner radialen Außenwandung in einer Ringnut (303) einen O-Ring (308).

Der Vorspannring (300) weist in seiner der Spannhülse (291) zugewandten Stirnfläche (301) eine Vielzahl von Sacklochbohrungen (302) auf. In jeder Sacklochbohrung (302) sitzt eine Schraubendruckfeder (305), die sich an der Spannhülse (291) abstützt.

Nach Figur 17, die die halbautomatische Werkzeugaufnahme (270) in pneumatisch entspanntem Zustand ohne eingesetzte HSK-Werkzeugschaft zeigt, liegt die Spannhülse (291) am Vorspannring (300) an. Alle Schraubendruckfedern (305) sind komprimiert.

Am vorderen Ende des Kolbenstangenabschnitts (292) befindet sich der Kolben (293), der gegenüber der Zylinderzone (277) mittels eines O-Ringes abgedichtet ist. An der Rückseite des Kolbens (293), sie ist dem Vorspannring (300) zugewandt, liegt Druckluft an. Im Ausführungsbeispiel wird die Druckluft mittels einer Druckluftblaspistole über einen im Haltering (121) sitzenden Elastomeradapter (127) in ein System (128) aus mehreren Bohrungen gepumpt. Von dort aus gelangt die Druckluft in den zwischen dem Haltering (121) und dem Flansch (204) gelegenen Konussitz. Die konische Zentrierfläche (205) weist in dem Bereich, in dem das System (128) endet, eine umlaufende Ringnut (208) auf, die mit einem weiteren System (209) aus Bohrungen in Wirkverbindung steht. Dieses System hat eine Bohrung (209), die in den rückwärtigen Zylinderraum (289) der Zylinderzone (277) mündet. Die über das System (209) eingebrachte Druckluft schiebt den Spannadapter (290) in Figur 17 nach links.

Links vom Kolben (293) erstreckt sich der Spannzangenhalteabschnitt (294). Letzterer hat eine Taille, um die eine mehrteilige Spannzange (295) mit ihren Hakenzungen angeordnet ist. Zum freien Ende hin weitet sich der Spannzangenhakenabschnitt (294) kegelstumpfartig auf, um mittels der kegelstumpfmantelförmigen Fläche die Spannzange (295) aufspreizen zu können. Der Kegelwinkel der kegelstumpfmantelförmigen Fläche beträgt hier 110 Winkelgrade. Je nach Spannzangenbauart kann er auch zwischen 90 und 120 Winkelgraden variieren.

Um die Spannzange (295) herum sitzt eine Konushülse (282). Sie weist rückseitig eine Zentrierstirnnut (284) auf, in die ein an der vorderen Stirnseite des Werkzeugaufnahmeschafts (271) angeordneter Ringsteg (280) mit einem Zentrier- und Außengewindeabschnitt (281) zentrierend und fixierend eingreift.

Zum Spannadapter (290) hin hat die Konushülse (282) einen Innenkonus (283) zur Lagefixierung der zweiten Schnittstelle. Im hinteren Bereich der Konushülse (282) sitzt ein Positionierring (286), der durch einen in einer Ringnut (285) eingeschnappten Sicherungsring (287) nach vorn axial gesichert ist. Der Positionierring (286) umgreift die Fangnasen der Hakenzungen der Spannzange. Er ist gegenüber dem Innenkonus (283) mittels eines O-Ringes (288) abgedichtet.

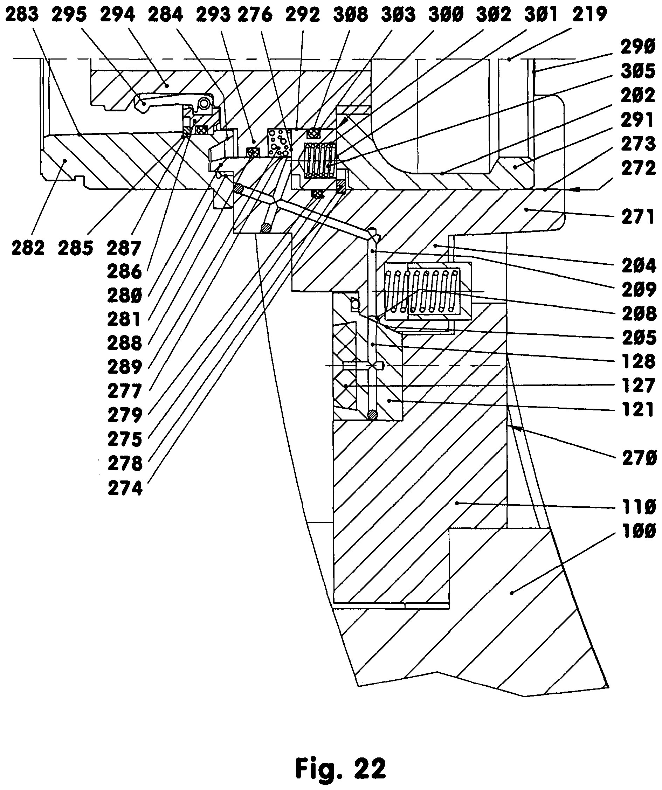

Bei dieser Werkzeugaufnahme (270) kann bei laufender Werkstückbearbeitung am Mehrebenenrohrmagazin (1) ein einzelnes Werkzeug vom Bediener ausgewechselt werden, sofern sich der Speicherdeckel (110) dieses Werkzeugs auf der der Bearbeitungsstelle entfernt gelegenen, gefahrlos zugängigen Seite des Mehrebenenrohrmagazins (1) befindet. In diesem Fall ergreift der Bediener das sich in der Magazinposition befindende Werkzeug mit der einen Hand, während er mit der anderen eine Druckluftblaspistole (620) mit der Ausblasdüse (621) auf den Elastomeradapter (127) aufsetzt, vgl. auch Figur 1. Beim Betätigen der Druckluftblaspistole (620) fährt der Spannadapter (290) pneumatisch in seine Lösestellung, vgl. Figuren 17 und 22. Die Hakenzungen der Spannzange (295) legen sich an den Spannzangenhalteabschnitt (294) an, so dass das Werkzeug aus dem Innenkonus (283) der Konushülse (282) kraftfrei herausgezogen werden kann.

Zum Einwechseln des Ersatzwerkzeuges wird dieser Vorgang wiederholt. Nach dem Absetzen oder Sperren der Druckluftblaspistole schieben die Schraubendruckfedern (305) des Vorspannringes (300) den Spannadapter (290) in seine Verriegelungsstellung, vgl. Figur 18. Das eingesetzte Werkzeug, in Figur 18 nicht dargestellt, sitzt nun durch die Schraubendruckfedern (305) vorgespannt in der Werkzeugaufnahme (270). Wird nun diese Werkzeugaufnahme (270) vor der Spindelwelle (50) positioniert, erfasst die arbeitsspindeleigene Spannzange (71), vgl. Figur 14, durch Hintergreifen der Ausnehmung (202), den Spannadapter (290). Über den Spannadapter (290) wird die Werkzeugaufnahme (270) gegen die Spindelwelle (50) gepresst. Hierbei wird die Spannzange (295) der zweiten Schnittstelle (296) zusätzlich endgültig gespannt.

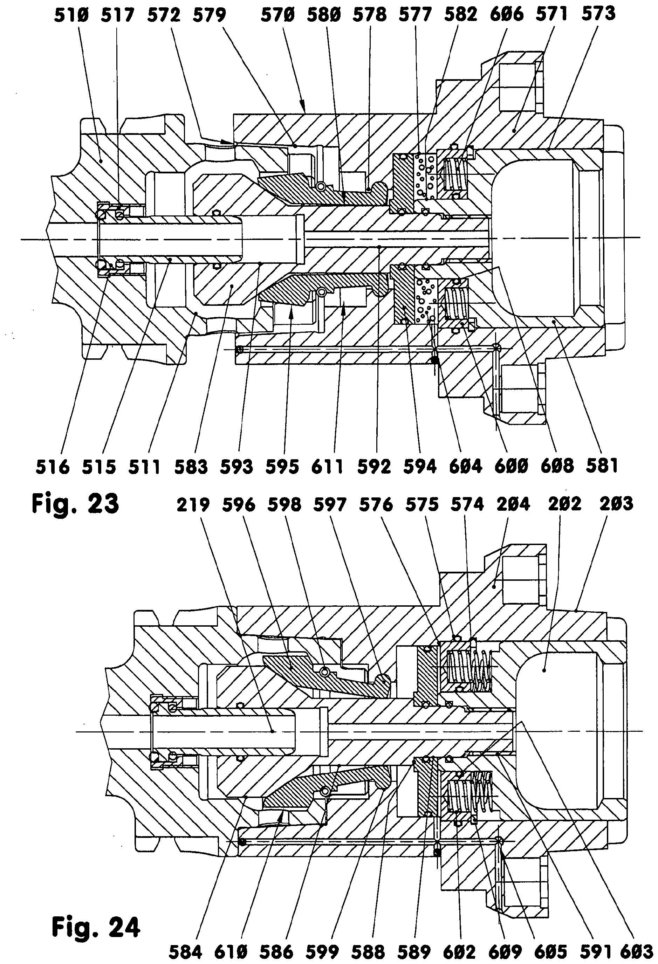

In den Figuren 23 bis 25 ist eine zweite Variante einer dynamischen Werkzeugaufnahme (570) dargestellt, mit der halbautomatisch ein Werkzeug (510) von einem Maschinenbediener oder Handhabungsroboter bei laufendem Betrieb eingewechselt werden kann.

Die Werkzeugaufnahme (570) hat einen Werkzeugaufnahmeschaft (571). Der Außenkonus (203), der Flansch (204), der Haltering (121) und die Teilungspositionierelemente (220) sind z.B. schon aus den Werkzeugaufnahmen (270, 230) bekannt. Allerdings hat hier der einteilige Werkzeugaufnahmeschaft (571) spindelwellenseitig eine zentrale Stufenbohrung (572), in der ein mehrteiliger Spannadapter (580) geführt ist. Die Stufenbohrung (572) hat hintereinander eine Spannhülsenführzone (573) und eine im Durchmesser kleinere Zylinderzone (577), eine Spannzangenhaltezone (578) und eine Innenkonuszone (579).

Der in der Stufenbohrung (572) geführte, mehrteilige Spannadapter (580) besteht aus einer Spannhülse (581) und einem Zugdorn (583), wobei Letzterer in eine Gewindebohrung der Spannhülse (581) eingeschraubt ist. Die Spannhülse (581) umfasst die mit dem Hintergriff versehene Ausnehmung (202). Über ihre Außenkontur ist die Spannhülse (581) mit geringem Spiel im vorderen Bereich der Stufenbohrung (572) geführt.

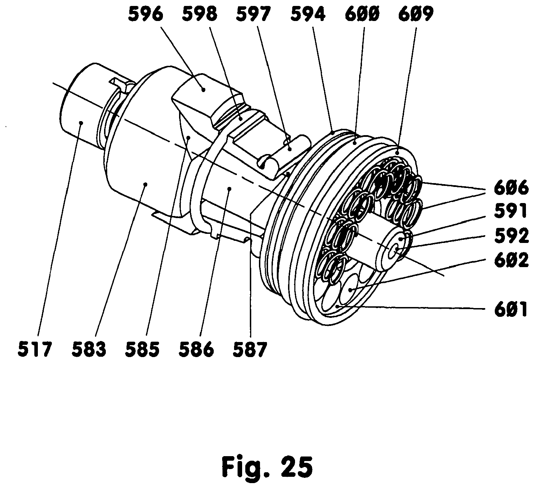

Der Zugdorn (583), vgl. auch Figur 25, hat einen Spreizabschnitt (584), einen Kolbenstangenabschnitt (586), einen Kolbensitzabschnitt (589) und einen Gewindeabschnitt (591). Mit dem Gewindeabschnitt (591) ist er in die Spannhülse (581) eingeschraubt. Auf dem Kolbensitzabschnitt (589), der sich zwischen einem Bund (588) und dem Gewindeabschnitt (591) erstreckt, sitzt am Bund (588) der Kolben (594). Der Kolben (594) ist gegenüber dem Kolbensitzabschnitt (589) mit einem O-Ring abgedichtet. Der zwischen dem Kolben (594) und dem Gewindeabschnitt (591) liegende Bereich des Zugdorns (583) stellt eine Zentrierzone dar, über die der Zugdorn (583) präzise in der Spannhülse (581) geführt ist. In der Zentrierzone ist die Spannhülse (581) gegenüber dem Zugdorn (583) mit einem O-Ring abgedichtet. Der Kolben (594) ist zwischen dem Bund (588) und der Spannhülse (581) eingespannt.

Der im Wesentlichen zylindrische Kolbenstangenabschnitt (586) weist auf zwei einander diametral gegenüberliegenden Bereichen eine durchgehende Abflachung (587) auf, vgl. Figur 25. Auf diesen Abflachungen (587) stützen sich die beiden Hakenzungen (596) der Spannzange (595) im Bereich ihrer Fanghaken (597) ab. An den Kolbenstangenabschnitt (586) schließt sich der Spreizabschnitt (584) an. Er hat ebenfalls eine im Wesentlichen zylindrische Form, die in dem dem Kolbenstangenabschnitt (586) zugewandten Bereich mit je einer Abschrägung (585) pro Abflachung (587) ausgestattet ist. Jede Abschrägung (585) geht in eine Abflachung (587) über. Sie schließt mit der Mittellinie (219) der Werkzeugaufnahme (570) einen Winkel ein, der zwischen 30 und 45 Winkelgraden liegt. Im Ausführungsbeispiel liegt der Winkel bei 35 Winkelgraden. An den Abschrägungen (585) liegen die vorderen Bereiche der Hakenzungen (596) an. Die Hakenzungen (596) haben im mittleren Bereich je eine Einkerbung, in der eine Ringfeder (598) liegt, die die beiden Hakenzungen (596) gegen die Abschrägungen (585) und Abflachungen (587) presst.

Der Zugdorn (583) weist eine zentrale Durchgangsbohrung (592) auf, die sich in den Bereichen des Spreizabschnitts (584) und einem Teil des Kolbenstangenabschnitts (586) um mehrere Millimeter zu einer feinbearbeiteten Mediumsübergabebohrung (593) aufweitet. In der Mediumsübergabebohrung (593) sitzt in einer Ringnut ein Dichtring.

Die Spannzangenhaltezone (578) stellt den engsten Bereich der durchgehenden Stufenbohrung (572) dar. Um die Hakenzungen (596) an ihren Fanghaken (597) lagern zu können, sind in der Spannzangenhaltezone (578), z.B. mit einem kleinen Scheibenfräser, zwei einander gegenüberliegende gerade Halbrundnuten (599) eingearbeitet. Die anschließende Innenkonuszone (579) dient der Aufnahme des Werkzeugs (510).

Die Spannhülse (581) hat an ihrer Rückseite einen Lagerabschnitt (582), auf dessen feinbearbeiteter, radialer Außenwandung ein Vorspannring (600) gleitfähig und abgedichtet geführt ist. Der Vorspannring (600) weist in seiner zentralen Bohrung eine Ringnut (603) auf, in der ein Dichtring (608) eingelegt ist. Der Vorspannring (600) liegt zugleich mit geringem Spiel an der Wandung der Spannhülsenführzone (573) der Stufenbohrung (572) an. Gegen die Spannhülsenführzone (573) ist er über einen O-Ring abgedichtet, der in einer Ringnut der Stufenbohrung (572) angeordnet ist.

Der Vorspannring (600) stützt sich mit geringem Spiel axial in der Spannhülsenführzone (573) zwischen einer an die Zylinderzone (577) anschließenden Bundfläche (576) und einem Sicherungsring (609) ab. Letzterer sitzt in einer in der Spannhülsenführzone (573) angeordneten Sicherungsringnut (574).

Der Vorspannring (600) hat in seiner der Spannhülse (581) zugewandten Stirnfläche (601) eine Vielzahl von dicht nebeneinander liegenden Sacklochbohrungen (602), vgl. Figur 25. In jeder Sacklochbohrung (602) sitzt eine Schraubendruckfeder (606), die sich an der Spannhülse (581), nach Figur 24, vorgespannt abstützt.

Das Werkzeug (510) hat nach den Figuren 23 und 24 eine HSK-Ausnehmung (511), in der - geringfügig beweglich - ein Mediumsübernahmerohr (515) gelagert ist. Das Mediumsübernahmerohr (515) hat an seinem im Werkzeug (510) gelegenen Ende einen Flansch (516), über den es mittels eines Einschraub-ringes (517) in einer zentralen Gewindebohrung des Werkzeugs (510) gelagert wird. Vor und hinter dem Flansch (516) befindet sich jeweils ein elastischer Ring. Die Ringe zentrieren das Mediumsübernahmerohr (515) elastisch.

Gemäß Figur 23, die die halbautomatische Werkzeugaufnahme (570) im pneumatisch betätigten Zustand zeigt, liegt die Spannhülse (581) am Vorspannring (600) an. Alle Schraubendruckfedern (606) sind komprimiert. In dem zwischen dem Kolben (594) und dem Vorspannring (600) vorhandenen Zylinderraum (604) steht Druckluft an, die z.B. über ein System (605) aus Bohrungen mittels der Druckluftblaspistole (620) in die Werkzeugaufnahme (570) gefördert wird. Dadurch befindet sich der Zugdorn (583) in seiner vordersten Lage, also der Löseposition (611). Die Hakenzungen (596) der Spannzange (595) liegen auf den Abflachungen (587) des Kolbenstangenabschnitts (586) auf, so dass das Werkzeug (510) in den Innenkonus (579) eingeschoben werden kann. Sobald der Außenkonus des Werkzeuges (510) in den Bereich des Innenkonus (579) gelangt, wird das Mediumsübernahmerohr (515) in die Mediumsübergabebohrung (593) eingeschoben. Hat das Werkzeug (510) in der Werkzeugaufnahme (570) seine sichere Endlage erreicht, wird der Zylinderraum (604) entlüftet. Die Federelemente (606) des Vorspannrings (600) schieben den Zugdorn (583) und die Spannhülse (581) in die in Figur 24 dargestellte Position. Die beiden Hakenzungen (596) hintergreifen den Hintergriff der Ausnehmung (511), um das Werkzeug (510) sicher zu halten. Der Zugdorn (583) und die Spannzange 595) befinden sich nun federbelastet vorgespannt in der Spannposition (610).

Befindet sich die Werkzeugaufnahme (570) mit dem sie lagernden Speicherdeckel (110) vor der Arbeitsspindel (40), ergreift die arbeitsspindelseitige Spannvorrichtung (70) die Spannhülse (581), um den Werkzeugaufnahmeschaft (571) mit seinem Flansch (204) gegen die Stirnfläche (51) der Spindelwelle (50) auf Anschlag zu ziehen. Die Spannvorrichtung (70) hält die werkzeugaufnahmeseitige Spannzange (595) in der Arbeitsposition (95) zusätzlich unter mechanischer Vorspannung.

Das System (605) aus Bohrungen kann alternativ durch ein im Magazinrohrkörper (100) im Speicherdeckel (110) integriertes Leitungssystem direkt über die Werkzeugmaschine mit Druckluft versorgt werden. Dazu ist entweder im entsprechenden Speicherdeckel (110) oder dem Magazinrohrkörper (100) ein Wegeventil eingebaut, das durch einen hand- oder fußbedienbaren Taster von einer Geschlossenstellung in eine Offenstellung bewegt werden kann.

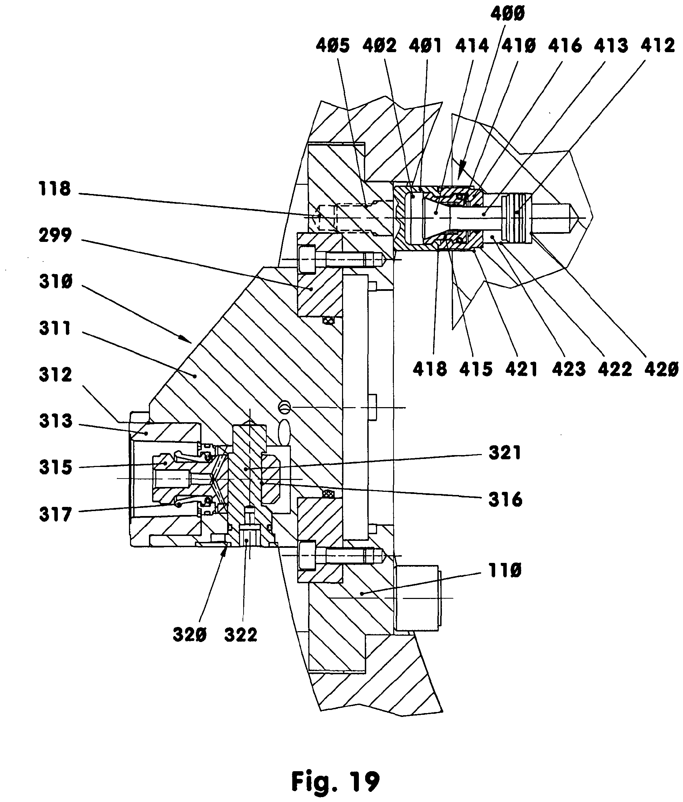

Figur 19 zeigt eine statische Werkzeugaufnahme (310). Diese sitzt fest verschraubt über einen Speicherdeckel (110) in dem relativ elastischen Magazinrohrkörper (100). Die Werkzeugaufnahme (310) hat in der Regel keine mechanische Verbindung zur Arbeitsspindel (40). Eine Ausnahme können Übertragungsmittel sein, mit deren Hilfe z.B. Schmier- und/oder Kühlmittel von der Arbeitsspindel auf die Werkzeugaufnahme übertragen werden.

Der Speicherdeckel (110) wird mittels eines Speicherdeckelspannsystems (400) formsteif mit dem Zentralblock (10) schaltbar verbunden. Dazu trägt jeder Speicherdeckel (110) an seiner Innenseite z.B. sechs Deckelspannhülsen (401). Dabei sind je zwei Deckelspannhülsen (401) im Bereich der schmalen Seitenflächen des Speicherdeckels (110) angeordnet. Zwei weitere Deckelspannhülsen (401) sitzen im mittleren Bereich des jeweiligen Speicherdeckels (110).

Die einzelne Deckelspannhülse (401) besteht aus einem Einschraubpassschaft (405) und einer Spannausnehmung (402) mit Hintergriff. Mit dem Einschraubpassschaft (405) wird die Deckelspannhülse (401) präzise am Speicherdeckel (110) fixiert.

Im Zentralblock (10) sind entsprechend den Deckelspannhülsen (401) des Speicherdeckels (110) sechs hydraulische Spanner (410) befestigt. Hierzu befinden sich im Zentralblock (10) pro Spanner (410) eine Stufenbohrung (420). Letztere ist in einen Einschraub- und Zentrierabschnitt (421) und einen Zylinderabschnitt (422) eingeteilt. Im Einschraub- und Zentrierabschnitt (421) sitzt eine Einschraubzentrierhülse (416) über ihr Außengewinde. Im gewindefreien hinteren Bereich befindet sich ihr Zentrierabschnitt. Im vorderen Bereich hat sie einen Hintergriff, hinter dem sich eine Spannzange (415) verhakt. Die freie Stirnseite der Einschraubzentrierhülse (416) weist eine Zentriereindrehung (418) auf, in der sich die Deckelspannhülse (401) zentrieren kann.

Der Spanner (410) hat zum Verspannen in der Deckelspannhülse (401) ein Spannelement (411). Letzteres ist eine Kombination aus einem Kolben (412), einer Kolbenstange (413) und einem Spannkonus (414). Der Kolben (412) ist auf das rückwärtige Ende der Kolbenstange (413) aufgeschraubt. Die Kolbenstange (413) durchdringt die zentrale Bohrung der Einschraubzentrierhülse (416). In der Bohrung sitzt in einer Ringnut ein O-Ring, um zwischen der Einschraubzentrierhülse (416) und dem Kolben (412) einen abgedichteten hydraulischen oder pneumatischen Spannraum (423) bereitzustellen.

Zum festen Andocken des Speicherdeckels (110) am Zentralblock (10) wird dieser über den Magazinrohrkörper (100) an den Zentralblock (10) herangeführt, bis die Deckelspannhülse (401) zentriert an der Einschraubzentrierhülse (416) anliegt. Der Spanner (410), der bisher in seiner vorderen Position verharrt, wird hydraulisch durch eine Druckbeaufschlagung des Spannraums (423) mittels des Kolbens (412) zurückgezogen, womit die Spannzange (415) die Deckelspannhülse (401) hintergreift. Durch die Spreizwirkung der Hakenzungen der Spannzange (415) wird der Speicherdeckel (110) unter einem Heranziehen an den Zentralblock (10) fixiert.

Auf dem Speicherdeckel (110) ist ggf. eine Grundplatte (299) befestigt, auf der z.B. in einer Bohrung der Grundkörper (311) des statischen Werkzeughalters (310) verschraubt sitzt, vgl. auch Figur 2. Der Grundkörper (311) hat eine Stufenbohrung (312), in der die erforderlichen Spannmittel sitzen. Im vorderen Bereich der Stufenbohrung (312) sitzt eine Halterkonushülse (313), an deren Innenwandung das aufzunehmende Werkzeug anliegt. In der Stufenbohrung (312) ist ein eine Spannzange (317) tragender Spanndorn (315) eingebaut. Der Spanndorn (315) hat hinter der Taille, an der seine Spannzange (317) anliegt, eine querliegende Querausnehmung (316), die durch eine im Grundkörper (311) gelagerte Spannwelle (320) durchdrungen wird.

Die z.B. um 180 Winkelgrade schwenkbare Spannwelle (320) hat außerhalb der Querausnehmung (316) zylindrische Abschnitte, mit denen sie im Grundkörper (311) gleitgelagert ist. In der Querausnehmung (316) hat sie die Form eines Gleichdicks (321), über das sich bei einem Drehen der Spannwelle (320) eine spannende Verschiebewirkung des Spanndorns (315) ergibt. Zum Antreiben der Spannwelle (320) hat diese in der freien Stirnseite z.B. eine Sechskantausnehmung (322).

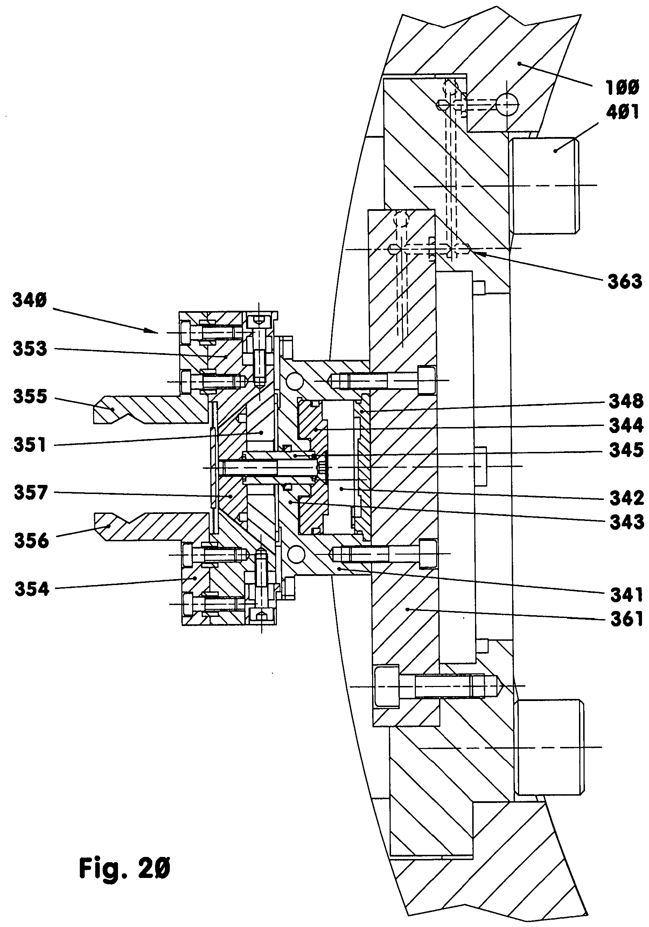

Figur 20 zeigt einen weiteren statischen Werkzeughalter. Er ist ein Parallelgreifer (340). Der Parallelgreifer (340) hat zwei Greifarme (355, 356), die z.B. pneumatisch zu- und aufbewegt werden können. Mittels des Parallelgreifers (340) können beispielsweise Werkstücke aus der Werkstückaufnahme des maschinenseitigen Werkstücktragschlittens (6) aufgenommen werden, um sie an anderer Stelle abzulegen oder weiterzugeben.

Der Parallelgreifer (340) sitzt z.B. mittig auf einer Basisplatte (361), die wiederum im Speicherdeckel (110) befestigt ist. Der Parallelgreifer (340) weist im einen Untergehäuse (341) eine Ausnehmung (342) auf, die unten mit einem Untergehäusedeckel (348) verschlossen ist. Der Boden (343) der Ausnehmung (342) hat eine Bohrung. In der Bohrung ist die Kolbenstange (345) eines z.B. ovalen Kolbens (344) abgedichtet geführt.

Am kolbenfernen Ende trägt die Kolbenstange (345) einen doppelseitigen Keilhaken (357), der in einem Obergehäuse (351) geführt ist. Beidseits des Keilhakens (357) ist im Obergehäuse (351) je ein Greifarm (353, 354) tragender Schlitten (353, 354) geführt. Der Keilhaken (357) hintergreift formschlüssig mit Spiel jeweils eine stirnseitige Ausnehmung des Schlittens (353, 354). Der Keilhaken (357) und die Schlitten (353, 354) bilden zwei Schiebekeilgetriebe.

Um die in Figur 20 in der Offenstellung stehenden Greifarme (355, 356) zu schließen, wird über ein Leitungssystem (363) Druckluft zwischen den Boden (343) und den Kolben (344) gefördert. Der nach rechts wandernde Kolben (344) zieht über den Keilhaken (357) die Schlitten (353, 354) aufeinander zu. Die Druckluft hierfür erhält der Parallelgreifer beispielsweise über das Leitungssystem (363). In ihm wird aus einem Kanal des Magazinrohrkörpers (100) Druckluft über den Speicherdeckel (110) und die Basisplatte (361) in das Untergehäuse (341) gepumpt.

Zum Öffnen der Greifarme (355, 356) wird über ein weiteres Leitungssystem der zwischen dem Kolben (344) und dem Untergehäusedeckel (348) liegende Zylinderraum mit Druck beaufschlagt.

Anstelle eines Speicherdeckels (110) wird ein dünnwandiger Blinddeckel (370) benutzt, vgl. Figur 6, falls eine Werkzeugaufnahmereihe (111) unbenutzt bleibt.

### Bezugszeichenliste:

- 1: Mehrebenenrohrmagazin
- 2: Mittellinie, Rotationsmittellinie von (1)
- 3: Werkzeugmaschine
- 4: Portalständer
- 5: Ständerausnehmung
- 6: Werkstücktragschlitten
- 7: Linearkoordinaten
- 8: Mittellinie, Rotationsmittellinie von (6)
- 9: Werkstücke

- 10: Zentralblock aus GGG40
- 11: Befestigungsseite, rückseitig
- 12: Führungsschienen, hinten
- 13: Stirnseite, frei, vorderseitig
- 14, 15: Querausnehmungen, groß
- 16: Führungsschienen, vorn
- 17: Linearantrieb, Zylinder-Kolben-Einheit, hydraulisch
- 18: Antriebsstange, Kolbenstange
- 19: Mittellinie des Zentralblocks

- 21: Stirnschlitten, Magazinrohrträger
- 22: Antriebsadapter
- 23: Führungswagen, Kugelumlaufführung, Lagerung
- 25: Wälzlager, zweireihiges Flanschschulterlager
- 26: Stirnschlittenflansch
- 27: Innendeckel
- 28: Abtriebsrad
- 29: Verschieberichtung, Führungsrichtung

- 31: Rotationsantrieb
- 32: Stirnrad, Antriebsrad
- 34: Führungswagen, Kugelumlaufführung, Lagerung
- 35, 36: Lagerschlitten, Magazinrohrträger
- 37: Ringflansch, Flansch
- 38: Nadellagerinnenring
- 39: Dichtring

- 40: Arbeitsspindel, Motorspindel
- 41: Mittellinie
- 42: Motorengehäuse, rohrförmig
- 43: Spiralnut
- 44: Innenflansch
- 45: Schulterlager, vorn
- 47: Flanschdeckel, flanschförmig
- 48: Schulterlager, hinten
- 49: Flanschhülse

- 50: Spindelwelle
- 51: Stirnfläche, Stirnseite
- 52: Lagersitz, vorn
- 53: Außengewinde, vorn
- 54: Stufenbohrung
- 55: Ausnehmung, konisch
- 56: Gewindehülse
- 57: Gewindehülsenflansch
- 58: Umgriff
- 59: Umlaufnut, innen

- 60: Gehäusedeckel, vorn
- 61: Umlaufnut, innen
- 62: Auswuchtring
- 63: Eindrehung in (60) für (66)
- 64: Spannhülse, hinten
- 65: Messzahnrad
- 66: Doppellippendichtung mit Metallkranz
- 67: Innenlippe, innere Dichtlippe
- 68: Außenlippe, äußere Dichtlippe
- 69: Druckluftbohrung

- 70: Spannvorrichtung
- 71: Spannzange
- 72: Zugdorn, Spreizdorn
- 73: Zugankerschraube
- 74: Tellerfederstempel

- 78: Distanzplatte
- 79: Durchgangsbohrung

- 80: Schmiermitteldrehdurchführung
- 81: Gehäuse
- 82: Hohlzapfen, zentral, verdrehgesichert
- 83: Schmiermittelübergabewelle
- 84: Gleitdichtring, rotierend
- 85: Gleitdichtring, drehfest
- 86: Hülse, längsverschiebbar
- 87: Ringkolben
- 88: Boden mit zentraler Bohrung
- 89: Rückholfedern, Schraubendruckfedern

- 90: Elektromotor, Antriebsmotor
- 91: Stator
- 92: Rotor
- 95: Arbeitsposition einer Werkzeugaufnahme
- 96: Magazinpositionen einer Werkzeugaufnahme
- 100: Magazinrohrkörper, 2 Ebenen, 8 Reihen
- 101, 102: Werkzeugaufnahmeebenen, 1., 2.
- 103: Ringe
- 104: Längsstreben
- 105: Ausnehmungen, rechteckig
- 106: Magazinrohrstützdeckel
- 107: Basisplatte
- 108: Innenraum
- 109: Mittellinie

- 110: Speicherdeckel
- 111: Werkzeugaufnahmereihe
- 112: Einfräsung, umlaufend, außen
- 113: Werkzeugträgerstufenbohrungen, Ausnehmung
- 114: Plansenkung
- 115: Radialspielabschnitt
- 116: Endabschnitt, zylindrisch
- 117: Teilsenkungen, sichelförmig, Ausnehmungen
- 118: Bohrung für das Andocken an (10)
- 119: Fangbund, plan

- 120: Aufnahmeform, umgriffsartig
- 121: Haltering
- 122: Senkung, konisch
- 123: Grund
- 124: Umlaufnut mit Hintergriff
- 125: Dichtring
- 126: Aufnahmeform, flanschartig
- 127: Elastomeradapter, Druckmittelzulaufanschluss
- 128: System aus Bohrungen
- 129: Schrauben
- 200: Werkzeugaufnahme, dynamisch, einfach
- 201: Werkzeugaufnahmeschaft
- 202: Ausnehmung mit Hintergriff, zentral Hintergriffsausnehmung
- 203: Außenkonus, Konus
- 204: Flansch
- 205: Zentrierfläche, kegelstumpfmantelförmige; konusförmiger Bereich von (204)
- 206: Sacklochbohrungen
- 207: Anschlagring
- 208: Ringnut
- 209: System aus Bohrungen

- 211: Ausnehmung in (201), konisch
- 212: Spannzange
- 219: Mittellinien der dynamischen Werkzeugaufnahmen

- 220: Teilungspositionierelement, topfförmig
- 221: Boden
- 222: Kragen
- 225: Schraubendruckfeder

- 230: Werkzeugaufnahme, dynamisch; Handspanner
- 231: Stufenbohrung, zentral
- 232: Konushülse
- 233: Konusabschnitt
- 234: Ringdeckel
- 235: Führungsschraube
- 236: Planbund
- 237: Bajonettabschnitt
- 238: Bajonettsteg

- 241: Handspanneinsatz
- 242: Quernuten
- 245: Spannbacken
- 246: Sondergewindebolzen
- 247: Ausdrückstifte

- 250: Werkzeugaggregat, Werkzeugaufnahme, dynamisch
- 251: Werkzeugaufnahmeschaft
- 252: HSK-Ausnehmung
- 253: Bohrung, zentral
- 254: Innenkerbverzahnung
- 257: Haltering, rohrförmig
- 258: Schrauben

- 261: Aggregategehäuse
- 263: Antriebswelle
- 264: Kronenrad
- 265: Außenkerbverzahnung
- 267: Abtriebswelle
- 268: Stirnrad
- 269: Spannzange

- 270: Werkzeugaufnahme, dynamisch; halbautomatisch
- 271: Werkzeugaufnahmeschaft
- 272: Stufenbohrung, zentral
- 273: Spannhülsenführzone
- 274: Sicherungsringnut
- 275: Dichtungsringnut
- 276: Planfläche
- 277: Zylinderzone einer Zylinder-Kolben-Einheit
- 278: Sicherungsring
- 279: O-Ring
- 280: Ringsteg
- 281: Zentrier- und Außengewindeabschnitt
- 282: Konushülse
- 283: Innenkonus, zweite Schnittstelle
- 284: Zentrierstirnnut
- 285: Ringnut

- 286: Positionierring
- 287: Sicherungsring
- 288: O-Ring
- 289: Zylinderraum

- 290: Spannadapter
- 291: Spannhülse
- 292: Kolbenstangenabschnitt
- 293: Kolben einer Zylinder-Kolben-Einheit
- 294: Spannzangenhalteabschnitt, zweite Schnittstelle
- 295: Spannzange, zweite Schnittstelle
- 296: HSK-Schnittstelle, 2. Schnittstelle
- 299: Grundplatte, Halteplatte

- 300: Vorspannring
- 301: Stirnfläche, rückwärtig
- 302: Sacklochbohrungen
- 303: Ringnut
- 305: Schraubendruckfedern
- 308: O-Ring

- 310: Werkzeughalter, statisch
- 311: Grundkörper
- 312: Stufenbohrung
- 313: Halterkonushülse
- 315: Spanndorn
- 316: Querausnehmung
- 317: Spannzange

- 320: Spannwelle
- 321: Gleichdick
- 322: Sechskantausnehmung, Innensechskant

- 340: Parallelgreifer, statischer Werkzeughalter
- 341: Untergehäuse
- 342: Ausnehmung, oval
- 343: Boden
- 344: Kolben, oval
- 345: Kolbenstange
- 348: Untergehäusedeckel

- 351: Obergehäuse
- 353, 354: Schlitten
- 355, 356: Greifarme
- 357: Keilhaken

- 361: Basisplatte, Halteplatte
- 363: Leitungssystem

- 370: Blinddeckel

- 400: Speicherdeckelspannsystem
- 401: Deckelspannhülse
- 402: Spannausnehmung mit Hintergriff
- 405: Einschraubpassschaft
- 410: Spanner, hydraulisch
- 411: Spannelement
- 412: Kolben
- 413: Kolbenstange
- 414: Spannkonus
- 415: Spannzange
- 416: Einschraubzentrierhülse
- 418: Zentriereindrehung

- 420: Stufenbohrung
- 421: Einschraub- und Zentrierabschnitt
- 422: Zylinderabschnitt
- 423: Spannraum

- 500: Werkzeug, Spiralbohrer
- 510: Werkzeug
- 511: HSK-Ausnehmung
- 515: Mediumsübernahmerohr
- 516: Flansch
- 517: Einschraubring mit Werkzeugnut

- 570: zweite Werkzeugaufnahme, dynamisch; halbautomatisch
- 571: Werkzeugaufnahmeschaft
- 572: Stufenbohrung
- 573: Spannhülsenführzone
- 574: Sicherungsringnut
- 575: Dichtungsringnut
- 576: Bundfläche, plan
- 577: Zylinderzone einer Zylinder-Kolben-Einheit
- 578: Spannzangenhaltezone
- 579: Innenkonuszone, zweite Schnittstelle
- 580: Spannadapter
- 581: Spannhülse
- 582: Lagerabschnitt
- 583: Zugdorn, zweite Schnittstelle
- 584: Spreizabschnitt
- 585: Abschrägungen
- 586: Kolbenstangenabschnitt einer Zylinder-Kolben-Einheit
- 587: Abflachungen
- 588: Bund
- 589: Kolbensitzabschnitt

- 591: Gewindeabschnitt
- 592: Durchgangsbohrung
- 593: Mediumsübergabebohrung
- 594: Kolben einer Zylinder-Kolben-Einheit
- 595: Spannzange, zweite Schnittstelle
- 596: Hakenzungen
- 597: Fanghaken
- 598: Ringfeder, Gummiring
- 599: Halbrundnuten

- 600: Vorspannring, Federspeicher
- 601: Stirnfläche, rückwärtig
- 602: Sacklochbohrungen
- 603: Ringnut
- 604: Zylinderraum
- 605: System aus Bohrungen
- 606: Schraubendruckfedern, Federelemente, Federspeicher
- 608: O-Ring, Dichtring
- 609: Sicherungsring

- 610: Spannposition
- 611: Löseposition
- 620: Druckluftblaspistole
- 621: Ausblasdüse

## Patentansprüche

1. Umlaufendes Mehrebenenrohrmagazin (1) mit mehreren Werkzeugaufnahmeebenen (101, 102) und Werkzeugaufnahmereihen (111), in dessen Innenraum (108) mehrere Arbeitsspindeln (40), eine pro Werkzeugaufnahmeebene (101, 102), in einem werkzeugmaschinenseitig ortsfest angeordneten, formsteifen Zentralblock (10) gelagert sind,
- wobei der Zentralblock (10) einen ein- oder mehrteiligen Magazinrohrträger (21, 35, 36) wälz- und/oder gleitlagert, der quer zur zentralblockeigenen Mittellinie (19) angetrieben verschiebbar ist,
- wobei der ein- oder mehrteilige Magazinrohrträger (21, 35, 36) einen mehrere Werkzeugaufnahmeebenen (101, 102) und Werkzeugaufnahmereihen (111) aufweisenden Magazinrohrkörper (100, 106) wälz- oder gleitlagert, der um den Zentralblock (10) angetrieben rotierbar ist,
- wobei der Magazinrohrkörper (100, 106) pro Werkzeugaufnahmereihe (111) einen Speicherdeckel (110) zur Magazinierung mehrerer Werkzeugaufnahmen (200, 230, 250, 270, 310, 340, 570) aufweist, deren Anzahl maximal der Anzahl der Werkzeugaufnahmeebenen (101, 102) entspricht,
- wobei der Speicherdeckel (110) mit den für die Werkstückbearbeitung erforderlichen Werkzeugaufnahmen (200, 230, 250, 270, 310, 340, 570) vor den vorderen Stirnseiten (51) der Arbeitsspindeln (40) sowohl in Umlaufrichtung des Magazinrohrkörpers (100, 106) als auch in Verschieberichtung (29) des Magazinrohrträgers (21, 35, 36) - in einer Arbeitsposition (95) - positionierbar ist,
- wobei mindestens eine dynamische Werkzeugaufnahme (270, 570) eine werkzeugaufnehmende Schnittstelle (283, 294, 295; 579, 583, 595) hat, die sich in einer Magazinposition (96) befindet und für das Aus- und/oder Einwechseln eines Werkzeugs (500, 510) - durch Zuschalten oder Zuführen von Fremdenergie - öffenbar ist und
- wobei die Arbeitsspindeln (40) nebeneinander angeordnet sind und ihre Mittellinien parallel zur Verschieberichtung (29) des Magazinrohrträgers (21, 35, 36) orientiert sind.

2. Umlaufendes Mehrebenenrohrmagazin gemäß Anspruch 1, **dadurch gekennzeichnet, dass** die Schnittstelle (283, 294, 295; 579, 583, 595) der dynamischen Werkzeugaufnahme (270, 570) einen Federspeicher (600, 606) aufweist, der mittels Federkraft eine Spannzange (295, 595) in Spannposition (610) positioniert.

3. Umlaufendes Mehrebenenrohrmagazin gemäß Anspruch 2, **dadurch gekennzeichnet, dass** die Schnittstelle (283, 294, 295; 579, 583, 595) der dynamischen Werkzeugaufnahme (270, 570) eine Zylinder-Kolben-Einheit (277, 293; 577, 586, 594) aufweist, deren Kolben (293; 594) mittels Druckluft oder Hydrauliköl die Spannzange (295, 595) in Löseposition (611) positioniert.

4. Umlaufendes Mehrebenenrohrmagazin gemäß Anspruch 1, **dadurch gekennzeichnet, dass** die dynamische Werkzeugaufnahme (270, 570) in der Magazinposition (96) mit dem Speicherdeckel (110) über ein Druckmittel führendes System (605) aus Bohrungen verbunden ist.

5. Umlaufendes Mehrebenenrohrmagazin gemäß Anspruch 4 , **dadurch gekennzeichnet, dass** der die dynamische Werkzeugaufnahme (270, 570) lagernde Speicherdeckel (110) einen Druckmittelzulaufanschluss (127) aufweist, an dem das System (605) aus Bohrungen angeschlossen ist.

6. Umlaufendes Mehrebenenrohrmagazin gemäß Anspruch 5 , **dadurch gekennzeichnet, dass** der Druckmittelzulaufanschluss (127) ein ringförmiger Elastomerkörper ist, über den von außen Druckluft in das System (605) aus Bohrungen bringbar ist.

7. Umlaufendes Mehrebenenrohrmagazin gemäß Anspruch 4, **dadurch gekennzeichnet, dass** das System (605) aus Bohrungen über den Magazinrohrkörper (100) und den Zentralblock (10) werkzeugmaschinenseitig anschließbar ist, um das System (605) permanent unter Druck zu halten.

8. Umlaufendes Mehrebenenrohrmagazin gemäß Anspruch 7, **dadurch gekennzeichnet, dass** im Speicherdeckel (110) ein handbetätigbares Wegeventil mit Schließstellung am System (605) angeschlossen ist, über das - bei Betätigung - die Zylinder-Kolben-Einheit (277, 293; 577, 586, 594) mit Druckluft versorgbar ist.

## Claims

1. Revolving multilevel tubular magazine (1) with a plurality of tool holder levels (101, 102) and tool holder rows (111), in the interior (108) of which a plurality of work spindles (40), one per tool holder level (101, 102), are mounted in a rigid central block (10) arranged in a fixed position on the machine tool side,
- wherein the central block (10) supports, on rolling and/or sliding bearings, a single- or multi-part magazine tube carrier (21, 35, 36) which can be moved in a driven manner transversely to the centre line (19) of the central block,
- wherein the single- or multi-part magazine tube carrier (21, 35, 36) supports, on rolling or sliding bearings, a magazine tube body (100, 106) having a plurality of tool holder levels (101, 102) and tool holder rows (111) which can be rotated in a driven manner around the central block (10),
- wherein the magazine tube body (100, 106) has, per tool holder row (111), a magazine cover (110) for storing a plurality of tool holders (200, 230, 250, 270, 310, 340, 570), the number of which corresponds at most to the number of tool holder levels (101, 102),
- wherein the magazine cover (110) with the tool holders (200, 230, 250, 270, 310, 340, 570) required in order to process the workpiece can - in a working position (95) - be positioned before the front end faces (51) of the work spindles (40) both in the direction of rotation of the magazine tube body (100, 106) and also in the direction of movement (29) of the magazine tube carrier (21, 35, 36),
- wherein at least one dynamic tool holder (270, 570) has a tool-holding interface (283, 294, 295; 579, 583, 595) which is located in a magazine position (96) and can be opened - by connecting or supplying external energy - in order to remove and/or exchange a tool (500, 510) and
- wherein the work spindles (40) are arranged next to one another and their centre lines are oriented parallel to the direction of movement (29) of the magazine tube carrier (21, 35, 36).

2. Revolving multilevel tubular magazine according to claim 1, **characterised in that** the interface (283, 294, 295; 579, 583, 595) of the dynamic tool holder (270, 570) has a spring mechanism (600, 606) which positions a collet (295, 595) in a clamping position (610) by means of spring force.

3. Revolving multilevel tubular magazine according to claim 2, **characterised in that** the interface (283, 294, 295; 579, 583, 595) of the dynamic tool holder (270, 570) has a cylinder-piston unit (277, 293; 577, 586, 594), the piston (293; 594) of which positions the collet (295, 595) in the release position (611) by means of compressed air or hydraulic oil.

4. Revolving multilevel tubular magazine according to claim 1, **characterised in that** the dynamic tool holder (270, 570) in the magazine position (96) is connected to the magazine cover (110) via a pressure-medium-carrying system (605) consisting of bores.

5. Revolving multilevel tubular magazine according to claim 4, **characterised in that** the magazine cover (110) mounting the dynamic tool holder (270, 570) has a pressure medium supply connection (127) to which the system (605) consisting of bores is connected.

6. Revolving multilevel tubular magazine according to claim 5, **characterised in that** the pressure medium supply connection (127) is an annular elastomer body through which compressed air can be brought into the system (605) consisting of bores from the outside.

7. Revolving multilevel tubular magazine according to claim 4, **characterised in that** the system (605) consisting of bores can be connected on the machine tool side via the magazine tube body (100) and the central block (10) in order to keep the system (605) permanently under pressure.

8. Revolving multilevel tubular magazine according to claim 7, **characterised in that**, in the magazine cover (110), a manually operable directional valve with closed position is connected to the system (605), via which - when actuated - the cylinder-piston unit (277, 293; 577, 586, 594) can be supplied with compressed air.

## Revendications

1. Magasin tubulaire rotatif à plans multiples (1) comprenant plusieurs plans de raccordements d'outils (101, 102) et rangées de raccordement d'outils (111), dans l'espace intérieur (108) duquel plusieurs broches de travail (40), une par plan de raccordement d'outils (101, 102), sont montées dans un bloc central (10) indéformable agencé à demeure côté machine-outil,
- dans lequel le bloc central (10) permet le montage sur palier à roulement ou sur palier lisse, d'un support tubulaire de magasin (21, 35, 36) monobloc ou en plusieurs parties, qui peut être entraîné à coulisser transversalement à la ligne médiane (19) du bloc central,
- dans lequel le support tubulaire de magasin (21, 35, 36) monobloc ou en plusieurs parties permet le montage sur palier à roulement ou sur palier lisse d'un corps tubulaire de magasin (100, 106) présentant plusieurs plans de raccordement d'outils (101, 102) et rangées de raccordement d'outils (111) qui peut être entraîné en rotation autour du bloc central (10),
- dans lequel le corps tubulaire de magasin (100, 106) présente, pour chaque rangée de raccordement d'outils (111), un couvercle de stockage (110) pour l'entreposage de plusieurs raccordements d'outils (200, 230, 250, 270, 310, 340, 570) dont le nombre correspond au maximum au nombre de plans de raccordement d'outils (101, 102),
- dans lequel le couvercle de stockage (110) peut être positionné avec les raccordements d'outils (200, 230, 250, 270, 310, 340, 570) nécessaires à l'usinage de pièces, devant les faces frontales (51) avant - dans une position de travail (95) - des broches de travail (40) non seulement dans le sens rotatif du corps tubulaire de magasin (100, 106), mais aussi dans le sens de coulissement (29) du support tubulaire de magasin (21, 35, 36),
- dans lequel au moins un raccordement d'outils dynamique (270, 570) présente une interface de réception d'outils (283, 294, 295 ; 579, 583, 595) qui se trouve dans une position de magasin (96) et peut être ouverte - par connexion ou apport d'énergie externe - afin d'échanger et/ou remplacer un outil (500, 510), et
- dans lequel les broches de travail (40) sont agencées les unes à côté des autres et leurs lignes médianes sont orientées parallèlement au sens de coulissement (29) du support tubulaire de magasin (21, 35, 36).

2. Magasin tubulaire rotatif à plans multiples selon la revendication 1, **caractérisé en ce que** l'interface (283, 294, 295 ; 579, 583, 595) du raccordement d'outils dynamique (270, 570) présente un accumulateur à ressort (600, 606) qui positionne un mandrin de serrage (295, 595) dans une position de serrage (610) grâce à une force de ressort.

3. Magasin tubulaire rotatif à plans multiples selon la revendication 2, **caractérisé en ce que** l'interface (283, 294, 295 ; 579, 583, 595) du raccordement d'outils dynamique (270, 570) présente une unité cylindre-piston (277, 293 ; 577, 586, 594) dont le piston (293; 594) positionne le mandrin de serrage (295, 595) dans une position de libération (611) au moyen d'air comprimé ou de fluide hydraulique.

4. Magasin tubulaire rotatif à plans multiples selon la revendication 1, **caractérisé en ce que** le raccordement d'outils dynamique (270, 570), dans la position de magasin (96), est raccordé depuis des alésages au couvercle de stockage (110) via un système de guidage de fluide sous pression (605).

5. Magasin tubulaire rotatif à plans multiples selon la revendication 4, **caractérisé en ce que** le couvercle de stockage (110) accueillant le raccordement d'outils dynamique (270, 570) présente un raccord d'alimentation en fluide sous pression (127) auquel est raccordé le système (605) depuis des alésages.

6. Magasin tubulaire rotatif à plans multiples selon la revendication 5, **caractérisé en ce que** le raccord d'alimentation en fluide sous pression (127) est un corps élastomérique annulaire qui permet d'amener depuis des alésages de l'air comprimé de l'extérieur dans le système (605).

7. Magasin tubulaire rotatif à plans multiples selon la revendication 4, **caractérisé en ce que** le système (605) peut être raccordé côté machine-outil depuis des alésages par l'intermédiaire du corps tubulaire de magasin (100) et du bloc central (10), afin de maintenir le système (605) en permanence sous pression.

8. Magasin tubulaire rotatif à plans multiples selon la revendication 7, **caractérisé en ce qu'**un distributeur à commande manuelle avec position de fermeture est raccordé au système (605) dans le couvercle de stockage (110), lequel distributeur permet d'alimenter en air comprimé- lors de l'actionnement - l'unité cylindre-piston (277, 293 ; 577, 586, 594).
